# EUROPEAN PATENT APPLICATION

(11) **EP 4 451 386 A1**
(43) Date of publication of application: **23.10.2024**
(21) Application number: 22947446.5
(22) Date of filing: 24.06.2022
(51) Int. Cl.: H01M 4/505, H01M 4/62, H01M 10/0525

(54) **POSITIVE ELECTRODE MATERIAL COMPOSITION AND PREPARATION METHOD THEREFOR, POSITIVE ELECTRODE PLATE COMPRISING SAME, SECONDARY BATTERY, AND ELECTRIC DEVICE**

(71) Applicant: Contemporary Amperex Technology (Hong Kong) Limited, Central, Central And Western District (HK)
(72) Inventor: MA, Qingyan, Ningde, Fujian 352100 (CN); WEN, Yan, Ningde, Fujian 352100 (CN); ZHAO, Yuzhen, Ningde, Fujian 352100 (CN); GUAN, Yingjie, Ningde, Fujian 352100 (CN); HUANG, Qisen, Ningde, Fujian 352100 (CN)
(74) Representative: Gong, Jinping
(86) International application number: PCT/CN2022/101328
(87) International publication number: WO 2023/245680

(57) **Abstract**

The present application provides a positive electrode material composition, a method for the preparation thereof and a positive electrode plate, a secondary battery and an electrical device containing the same. The positive electrode material composition includes a positive electrode active material and an organopolysiloxane compound, wherein said positive electrode active material has a chemical formula of LiₐAₓMm_{1-y}B_{y}P_{1-z}C_{z}C₄₋ₙDₙ. The positive electrode material composition of the present application enables the secondary battery to have a relatively high energy density, while further improving rate performance, cycling performance and/or high-temperature stability of the secondary battery.

## Description

### TECHNICAL FIELD

The present application belongs to the technical field of batteries, in particular to a positive electrode material composition, a method for the preparation thereof and a positive electrode plate, a secondary battery and an electrical device.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources, however, lithium manganese phosphate is prone to manganese ion leaching out during charging, resulting in rapid capacity decay.

### SUMMARY

An object of the present application is to provide a positive electrode material composition, a method for the preparation thereof, and a positive electrode plate, a secondary battery and an electrical device comprising the same. The positive electrode material composition enables the secondary battery to have a relatively high energy density, while further improving rate performance, cycling performance and/or high-temperature stability of the secondary battery.

A first aspect of the present application provides a positive electrode material composition, comprising a positive electrode active material and an organopolysiloxane compound, wherein said positive electrode active material has a chemical formula of LiₐAₓMn_{1-y}B_{y}P_{1-z}C_{z}O₄₋ₙDₙ, said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said a is in the range of 0.9 to 1.1, said x is in the range of 0.001 to 0.1, said y is in the range of 0.001 to 0.5, said z is in the range of 0.001 to 0.1, said n is in the range of 0.001 to 0.1, and said positive electrode active material is electrically neutral.

In the present application, by doping the compound LiMnPO₄ with specific elements in specific amounts at Li, Mn, P and O sites at the same time, it is allowed to obtain improved rate performance while reducing the leaching out of Mn and Mn-site doping elements, thereby obtaining improved cycling performance and/or high-temperature stability, and the capacity per gram (also referred to as "specific capacity") and compaction density of the positive electrode active material can also be improved. The combination of the positive electrode active material with the organopolysiloxane compound of the present application can alleviate the erosion of the surface of the positive electrode active material caused by the electrolytic solution and reduce the leaching out of Mn and Mn-site doping elements, so as to improve the electrochemical performance of the positive electrode active material. Therefore, electrical devices such as a positive electrode plate and a secondary battery using the positive electrode material composition of the present application may have a relatively high energy density, while further having an improved rate performance, cycling performance and/or high-temperature stability.

In some embodiments of the present application, said organopolysiloxane compound comprises at least one structural unit shown in Formula 1,

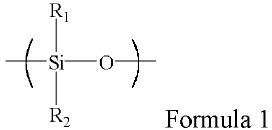

R₁ and R₂ each independently represent H or at least one of the group consisting of the following functional groups: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbon groups, C₁-C₂₀ halogenated aliphatic hydrocarbon group, C₁-C₂₀ heteroaliphatic hydrocarbon groups, C₁-C₂₀ halogenated heteroaliphatic hydrocarbon groups, C₆-C₂₀ aromatic hydrocarbon groups, C₆-C₂₀ halogenated aromatic hydrocarbon groups, C₂-C₂₀ heteroaromatic hydrocarbon groups, and C₂-C₂₀ halogenated heteroaromatic hydrocarbon groups. Optionally, R₁ and R₂ each independently represent H or at least one of the group consisting of the following functional groups: -COOH, -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, and phenyl. More optionally, R₁ and R₂ each independently represent H or at least one of the group consisting of the following functional groups: -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, and C₂-C₈ haloalkenyl groups. As a result, the leaching out of Mn and Mn-site doping elements can be reduced, and the cycling performance and/or high-temperature stability of the battery can be significantly improved.

In some embodiments of the present application, the organopolysiloxane compound comprises one or more selected from of a linear polysiloxane, and a cyclic polysiloxane, optionally, the organopolysiloxane compound is selected from a linear polysiloxane.

As a result, the erosion of the surface of the positive electrode active material caused by acidic substances in the electrolytic solution can be further alleviated, and the leaching out of Mn and Mn-site doping elements can be reduced, so as to significantly improve the cycling performance and storage performance of the battery. Due to the delocalization of electrons in the ring of the cyclic polysiloxane, the Si-O skeleton of the cyclic polysiloxane has a lower affinity for electron-rich F-containing ions than that of the linear polysiloxane, and thus the removal efficiency of F-containing ions in the electrolytic solution is slightly lower, the effect of reducing the leaching out of Mn and Mn-site doping elements is slightly weak, and the effect of improving the cycling performance of the battery is slightly poor.

In some embodiments of the present application, the linear polysiloxane further comprises a capping group. Optionally, the capping group comprises at least one of the group consisting of the following functional groups: polyethers, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, C₆-C₂₀ aromatic hydrocarbon groups, C₁-C₈ alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

In some embodiments of the present application, the linear polysiloxane comprises one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, terminal epoxy polysiloxane, terminal hydroxyl polydimethylsiloxane, terminal polyether polydimethylsiloxane, pendant aminopropyl polysiloxane, pendant hydroxymethyl polysiloxane, pendant hydroxypropyl polysiloxane, pendant polyether-grafted polydimethylsiloxane, and pendant phosphate-grafted polydimethylsiloxane. Optionally, the linear polysiloxane comprises one or more of polydimethyl siloxane, polymethyl chloropropyl siloxane, polymethyl trifluoropropyl siloxane, mercaptopropyl polysiloxane, aminoethyl aminopropyl polydimethylsiloxane, terminal hydroxyl polydimethylsiloxane, terminal polyether polydimethylsiloxane, side chain phosphate-grafted polydimethylsiloxane.

In some embodiments of the present application, the cyclic polysiloxane comprises one or more of cyclic polydimethylsiloxane, cyclic polymethyl vinyl siloxane, cyclic polymethyl hydrosiloxane, and cyclic polymethyl trifluoropropyl siloxane. Optionally, the cyclic polysiloxane comprises one or more of 1,3,5,7-octamethyl cyclotetrasiloxane, 1,3,5,7-tetrahydro-1,3,5,7-tetramethyl cyclotetrasiloxane, decamethylcyclopentasiloxane, 2,4,6,8-tetramethyl cyclotetrasiloxane, 2,4,6,8-tetramethyl-2,4,6,8-tetravinyl cyclotetrasiloxane, hexadecamethylcyclooctasiloxane, and tetradecamethylcycloheptasiloxane.

In some embodiments of the present application, the organopolysiloxane compound has a number average molecular weight of 300,000 or less, optionally of 400 to 80,000. As a result, the battery may have good dynamic performance and high-temperature stability at the same time.

In some embodiments of the present application, a polar functional group is present in a mass percentage *α* in the organopolysiloxane compound, 0≤*α*< 50%, optionally, 5%≤*α*≤30%. As a result, the cycling performance and/or high-temperature stability of the battery can be better improved.

In some embodiments of the present application, the organopolysiloxane compound is present in an amount of 0.01 wt% to 2 wt%, optionally 0.1 wt% to 2 wt%, based on the total weight of the positive electrode material composition. As a result, the cycling performance and/or high-temperature stability of the battery can be better improved.

In some embodiments of the present application, the positive electrode active material is cladded with carbon on the surface. As a result, the conductivity of the positive electrode active material can be improved.

In some embodiments of the present application, each of said A, C and D is independently any one element in the above-mentioned respective range, and said B is at least two elements in the above-mentioned range.

Optionally, said A is any one element selected from Mg and Nb.

Optionally, said B is at least two elements selected from Fe, Ti, V, Co and Mg, further being the combination of Fe with one or more element selected from Ti, V, Co and Mg.

Optionally, said C is S.

Optionally, said D is F.

This enables further improvement of the rate performance, energy density and/or high-temperature stability of batteries.

In some embodiments of the present application, said *a* is selected from a range of 0.97 to 1.01.

In some embodiments of the present application, said *x* is selected from the range of 0.001 to 0.005. As a result, the dynamic performance of the positive electrode active material can be further improved.

In some embodiments of the present application, said y is selected from the range of 0.25 to 0.5. As a result, the specific capacity and rate performance of the positive electrode active material can be further improved.

In some embodiments of the present application, said z is selected from the range of 0.001 to 0.005. As a result, the rate performance of batteries can be further improved.

In some embodiments of the present application, said n is selected from the range of 0.001 to 0.005. As a result, the high-temperature stability of batteries can be further improved.

In some embodiments of the present application, the ratio of (1-*y*):*y* is in the range of 1 to 4, optionally in the range of 1.5 to 3, and the ratio of *a*:*x* is in the range of 9 to 1100, optionally in the range of 190 to 998. As a result, the energy density and cycling performance of batteries can be further improved.

In some embodiments of the present application, said positive electrode active material has a lattice change rate of 8% or less, optionally 4% or less. As a result, the rate performance of batteries can be improved.

In some embodiments of the present application, said positive electrode active material has a Li/Mn anti-site defect concentration of 2% or less, optionally 0.5% or less. As a result, the specific capacity and rate performance of the positive electrode active material can be improved.

In some embodiments of the present application, said positive electrode active material has a surface oxygen valence of -1.82 or less, optionally -1.89 to -1.98. As a result, the cycling performance and high-temperature stability of batteries can be improved.

In some embodiments of the present application, said positive electrode active material has a compaction density of 2.0 g/cm³ or more, optionally 2.2 g/cm³ or more, at 3T. As a result, the bulk energy density of batteries can be increased.

In some embodiments of the present application, the positive electrode material composition further comprises a conductive agent and a binder. Optionally, the binder is present in a content of 1.79 wt% to 10 wt%, based on the total weight of the positive electrode material composition. Optionally, the conductive agent is present in a content of 0.2 wt% to 10 wt%, based on the total weight of the positive electrode material composition.

In some embodiments of the present application, the positive electrode material composition has a powder resistivity of 4 Ω/cm to 50 Ω/cm, optionally from 4 Ω/cm to 40 Ω/cm at 12MPa. As a result, the battery may have a better dynamic performance.

In some embodiments of the present application, the positive electrode material composition has a specific surface area of 8 m²/g to 20 m²/g, optionally 8 m²/g to 15 m²/g. As a result, the battery may have a better dynamic performance.

A second aspect of the present application provides a method for preparing a positive electrode material composition, comprising
Step (1), dissolving a manganese source, a source of element B and an acid in a solvent and stirring to produce a suspension of a manganese salt doped with element B, filtering the suspension and drying the resulting filter cake to obtain the manganese salt doped with element B;
Step (2), adding a lithium source, a phosphorus source, a source of element A, a source of element C and a source of element D, a solvent and the manganese salt doped with element B obtained from step (1) to a reaction vessel for grinding and mixing to obtain a slurry;
Step (3), transferring the slurry obtained from step (2) to a spray drying equipment for spray drying and granulating to obtain granules;
Step (4), sintering the granules obtained from step (3) to obtain a positive electrode active material;
Step (5), mixing the positive electrode active material obtained from step (4) with an organopolysiloxane compound, and optionally a conductive agent and a binder, to obtain the positive electrode material composition,
in which said positive electrode material composition has a chemical formula of LiₐAₓMn_{1-y}B_{y}P_{1-z}C_{z}O₄₋ₙDₙ, wherein said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said *a* is in the range of 0.9 to 1.1, said *x* is in the range of 0.001 to 0.1, said *y* is in the range of 0.001 to 0.5, said z is in the range of 0.001 to 0.1, said n is in the range of 0.001 to 0.1, and said positive electrode active material is electrically neutral.

In some embodiments of the present application, stirring in said step (1) is carried out at a temperature in the range of 60-120°C.

In some embodiments of the present application, stirring in said step (1) is carried out by stirring at a rate of 200-800 rpm.

In some embodiments of the present application, grinding and mixing in said step (2) are carried out for 8-15 hours.

Thus, by controlling the reaction temperature, stirring rate and mixing time during doping, uniform distribution of doping elements and higher crystallinity of the material after sintering can be achieved, and thus the specific capacity and rate performance of the positive electrode active material can be improved.

In some embodiments of the present application, the sintering in said step (4) is carried out at a temperature in the range of 600-900°C for 6-14 hours. As a result, the high-temperature stability and cycling performance of batteries can be improved.

In some embodiments of the present application, said step (2) further comprises adding a carbon source to a reaction vessel for grinding and mixing. As a result, the positive electrode active material cladded with carbon can be obtained.

A third aspect of the present application provides a positive electrode plate comprising a positive electrode current collector and a positive electrode film layer provided on at least one surface of the positive electrode current collector, wherein said positive electrode film layer comprises the positive electrode material composition of the first aspect of the present application or the positive electrode material composition prepared by the method of the second aspect of the present application, and said positive electrode material composition is present in said positive electrode film layer in a content of 50 wt% or more, based on total weight of said positive electrode film layer.

In some embodiments of the present application, said positive electrode material composition is present in said positive electrode film layer in a content of 90 wt% to 100 wt%, based on total weight of said positive electrode film layer.

In some embodiments of the present application, a solid-liquid contact angle between the positive electrode film layer and a non-aqueous organic solvent is between 3° and 90°, optionally between 3° and 60°, and more optionally between 10° and 30°. The contact angle in a suitable range enables the battery to have a relatively high energy density, while further improving rate performance, cycling performance and/or high-temperature stability.

In some embodiments of the present application, the positive electrode film layer has a porosity of 15% to 50%, and optionally 20% to 40%. The porosity in a suitable range enables the battery to have a relatively high energy density, while further improving rate performance, cycling performance and/or high-temperature stability.

A fourth aspect of the present application provides a secondary battery comprising the positive electrode material composition of the first aspect of the present application, or the positive electrode material composition prepared by the method of the second aspect of the present application, or the positive electrode plate of the third aspect of the present application.

A fifth aspect of the present application provides an electrical device comprising the secondary battery of the fourth aspect of the present application.

The positive electrode plate, the secondary battery, and the electrical device of the present application include the positive electrode material composition of the present application, and thus have at least the same advantages as said positive electrode material composition.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power.
FIG. 7 illustrates an X-ray diffraction (XRD) of the undoped LiMnPO₄ and the positive electrode active material prepared in Example 2.
FIG. 8 illustrates an X-ray energy dispersive spectroscopy (EDS) of the positive electrode active material prepared in Example 2.

In the drawings, the accompanying drawings are not necessarily drawn to an actual scale. Among them, the reference sings in the accompanying drawings are illustrated as follows: 1 - battery pack, 2 - upper case, 3 - lower case, 4 - battery module, 5 - secondary battery, 51 - housing, 52 - electrode assembly, and 53- cover plate.

### DETAILED DESCRIPTION

Hereinafter, embodiments of the positive electrode material composition, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, substituents of compounds are disclosed as groups or ranges. It is explicitly expected that such a description includes each individual subcombination of members of these groups and ranges. For example, the term "C1-C8 alkyl group" is explicitly expected to disclose C1, C2, C3, C4, C5, C6, C7, C8, C1-C8, C1-C7, C1-C6, C1-C5, C1-C4, C1-C3, C1-C2, C2-C8, C2-C7, C2-C6, C2-C5, C2-C4, C1-C3, C1-C2, C2-C8, C2-C7, C2-C6, C2-C5, C2-C4, C2-C4, C2~C4, C2~. C3, C3-C8, C3-C7, C3-C6, C3-C5, C3-C4, C4-C8, C4-C7, C4-C6, C4-C5, C5-C8, C5-C7, C5-C6, C6-C8, C6-C7, C5-C6, C6-C8, C6-C7, and C7-C8 alkyl groups.

As used herein, the term "aliphatic hydrocarbon group" comprises alkyl, alkenyl, and alkynyl groups. The term "heteroaliphatic hydrocarbon group" means that the aliphatic hydrocarbon group containing heteroatoms (e.g., N, O, S, etc.). The term "heteroalkyl group" means that the alkyl group containing heteroatoms (e.g., N, O, S, etc.), such as alkoxy group, alkylthiogroup, etc.

As used herein, the terms "a plurality of ", and "more" mean two or more.

As used herein, an "about" value indicates a range of that the specified value ± 10%.

The inventors of the present application found in the actual operation that manganese ion leaching out is serious during the deep charging and discharging of the lithium manganese phosphate (LiMnPO₄) positive electrode active material. Although the prior art have attempted to clad lithium manganese phosphate with lithium iron phosphate to reduce interfacial side reactions, such cladding cannot prevent the migration of the leached manganese ions into the electrolytic solution. The leached manganese ions are reduced to manganese metal after migration to the negative electrode. The produced metal manganese is equivalent to "catalyst", which can catalyze the decomposition of the SEI (solid electrolyte interphase) film on the surface of the negative electrode to produce a by-product. One part of the by-product is gas, which is prone to cause the battery to expand and affect the safety performance of the battery, and the other part is deposited on the surface of the negative electrode, and blocks the channel of lithium ion in and out of the negative electrode, resulting in increased impedance of the battery and affecting the dynamic performance of the battery. In addition, in order to supplement the decomposed SEI film, the electrolytic solution and the active lithium ions in the battery are continuously consumed, which also has an irreversible impact on the capacity retention rate of the battery.

The inventors of the present application have deeply studied the effects of doping of lithium manganese phosphate with various elements at Li, Mn, P and O sites and found that by doping with specific elements in specific amounts at the above four sites, an improved lithium manganese phosphate positive electrode active material can be obtained. At the same time, the inventors of the present application found that the combination of the improved lithium manganese phosphate positive electrode active material with the organopolysilane compound can alleviate the erosion of the surface of the improved lithium manganese phosphate positive electrode active material caused by the electrolytic solution, so as to give full play to the electrochemical performance of the improved lithium manganese phosphate positive electrode active material.

### Positive electrode material composition

Specifically, a first aspect of the present application provides a positive electrode material composition comprising a positive electrode active material and an organopolysiloxane compound.

Said positive electrode active material has a chemical formula of LiₐAₓMn_{1-y}B_{y}P_{1-z}C_{z}O₄₋ₙDₙ, wherein said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said *a* is in the range of 0.9 to 1.1, said *x* is in the range of 0.001 to 0.1, said *y* is in the range of 0.001 to 0.5, said z is in the range of 0.001 to 0.1, said n is in the range of 0.001 to 0.1, and said positive electrode active material is electrically neutral.

Unless otherwise stated, in the above chemical formula, when A represents more than two elements, the above range for the x value is not only for the stoichiometric number of each element as A, but also for the sum of the stoichiometric numbers of each element as A. For example, when A represents more than two elements A1, A2 ...... and An, each of the respective stoichiometric numbers x1, x2 ......and xn of respective A1, A2 ......and An must fall within the numerical range defined by the present application for x, and the sum of x1, x2...... and xn must also fall within such numerical range of the present application. Similarly, in the case where B, C and D are more than two elements, the limitations on numerical ranges for the stoichiometric numbers of B, C and D in the present application also have the above meaning.

The positive electrode active material of the present application is obtained by doping the compound LiMnPO₄ with various elements, wherein A, B, C and D are elements for doping at the Li, Mn, P and O sites of the compound LiMnPO₄, respectively. Without wishing to be bound by theory, it is now believed that the improvement of performances of lithium manganese phosphate is related to the reduction of the lattice change rate of lithium manganese phosphate in the process of de-intercalation and intercalation of lithium ions and the reduction of surface activity. The reduction of the lattice change rate can reduce the difference in lattice constants between two phases at the grain boundary, reduce the interfacial stress, enhance the Li⁺ transport at the interface, and thus improve the rate performance of the positive electrode active material. High surface activity tends to lead to serious interfacial side reactions, which intensify gas production, consumption of the electrolytic solution and interface damage, thus affecting the cycling performance of the battery. In this application, the lattice change rate is reduced by doping at Li and Mn sites. The Mn-site doping also effectively reduces the surface activity, thus inhibiting the leaching out of manganese ion and the interfacial side reactions between the positive electrode active material and the electrolytic solution. The P-site doping results in a faster change rate of Mn-O bond length and reduces migration barrier of small polaron of the material, thus contributing to the enhancement of electronic conductivity. The O-site doping has a good effect on reducing the interfacial side reactions. The doping at the P- and O-sites also has an effect on the leaching out of manganese ion of the anti-site defects and dynamic performance.

Thus, doping reduces the concentration of anti-site defects in the positive electrode active material, improves the dynamic performance and specific capacity of the positive electrode active material, and also changes the morphology of particles, thus enhancing the compaction density. The inventors of the present application unexpectedly found that by doping the compound LiMnPO₄ with specific elements in specific amounts at Li, Mn, P and O sites at the same time, it is allowed to obtain improved rate performance while reducing the leaching out of Mn and Mn-site doping elements, thereby obtaining improved cycling performance and/or high-temperature stability, and the specific capacity and compaction density of the positive electrode active material can also be improved. Optionally, A is one or more elements selected from Zn, Al, Na, K, Mg, Nb, Mo and W, B is one or more elements selected from Ti, V, Zr, Fe, Ni, Mg, Co, Ga, Sn, Sb, Nb and Ge, C is one or more elements selected from B (boron), S, Si and N, and D is one or more elements selected from S, F, Cl and Br.

The positive electrode material composition of the present application comprises a positive electrode active material and an organopolysiloxane compound. The inventors of the present application found that the combination of the positive electrode active material with the organopolysilane compound can alleviate the erosion of the surface of the positive electrode active material caused by the electrolytic solution, and reduce the leaching out of Mn and Mn-site doping elements, so as to improve the electrochemical performance of the positive electrode active material. The possible reason is that the Si-O skeleton of the organopolysiloxane compound can remove F ions from the electrolytic solution, thereby reducing the acidity of the electrolytic solution and alleviating the erosion of the surface of the positive electrode active material caused by acidic substances in the electrolytic solution. The organopolysiloxane compound also has a certain hydrophobicity, and can be used to prepare a positive electrode plate with positive electrode active material. A contact angle between the prepared positive electrode plate and the electrolytic solution is increased, so as to alleviate the erosion of the surface of the positive electrode active material caused by the electrolytic solution.

As a result, the electrical device such as the positive electrode plate and secondary battery using the positive electrode material composition of the present application can have high energy density, and also have a relatively high energy density, while further improving rate performance, cycling performance and/or high-temperature stability.

It should be noted that the XRD spectra of undoped and doped LiMnPO₄ in this application reveal that the positions of the primary characteristic peaks of the positive electrode active material of the present application are basically the same as those of undoped LiMnPO₄, indicating that the doped lithium manganese phosphate positive electrode active material of the present application has no impurity phase and the improvement of battery performances is mainly caused by the doping of elements rather than by the impurity phase.

In some embodiments, each of said A, C and D is independently any one element in the above-mentioned respective range, and said B is at least two elements in the above-mentioned range. This enables easier and more accurate control of the composition of the positive electrode active material.

Optionally, said A is any one element selected from Mg and Nb.

Optionally, said B is at least two elements selected from Fe, Ti, V, Co and Mg, optionally being Fe with more than one element selected from Ti, V, Co and Mg.

Optionally, said C is S.

Optionally, said D is F.

By selecting the Li-site doping element within the above range, the lattice change rate during the de-intercalation process can be further reduced, thereby further improving the rate performance of batteries. By selecting the Mn-site doping element in the above range, the electronic conductivity can be further improved and the lattice change rate can be further reduced, thus improving the rate performance and energy density of batteries. By selecting the P-site doping element in the above range, the rate performance of batteries can be further improved. By selecting the O-site doping element in the above range, the side reactions at the interface can be further reduced and the high-temperature stability of batteries can be improved.

Said *a* is selected from the range of 0.9 to 1.1, for example, 0.97, 0.977, 0.984, 0.988, 0.99, 0.991, 0.992, 0.993, 0.994, 0.995, 0.996, 0.997, 0.998, and 1.01. In some embodiments, said *n* is selected from the range of 0.97 to 1.01.

Said *x* is selected from the range of 0.001 to 0.1, for example, 0.001, and 0.005.

Said *y* is selected from the range of 0.001 to 0.5, such as 0.001, 0.005, 0.02, 0.05, 0.1, 0.15, 0.2, 0.25, 0.3, 0.34, 0.345, 0.349, 0.35, and 0.4.

Said *z* is selected from a range of 0.001 to 0.1, such as 0.001, 0.005, 0.08, and 0.1.

Said *n* is selected from a range of 0.001 to 0.1, such as 0.001, 0.005, 0.08, and 0.1.

In some embodiments, said *x* is selected from the range of 0.001 to 0.005.

In some embodiments, said *y* is selected from a range of 0.01 to 0.5, optionally from a range of 0.25 to 0.5.

In some embodiments, said z is selected from the range of 0.001 to 0.005.

In some embodiments, said n is selected from the range of 0.001 to 0.005.

The dynamic performance of the positive electrode active material can be further enhanced by selecting the *x* value within the above range. The specific capacity and rate performance of the positive electrode active material can be further enhanced by selecting the *y* value within the above range. By selecting the z value within the above range, the rate performance of batteries can be further improved. The high-temperature stability of batteries can be further improved by selecting the n value within the above range.

In some embodiments of the present application, the positive electrode active material satisfies the ratio of (1-*y*):*y* within the range of 1 to 4, optionally in the range of 1.5 to 3, and the ratio of *a*:*x* within the range of 9 to 1100, optionally in the range of 190 to 998. Here *y* denotes the sum of the stoichiometric numbers of the Mn-site doping elements. The energy density and cycling performance of batteries can be further improved when the above conditions are satisfied.

In some embodiments of the present application, said positive electrode active material is cladded with carbon on the surface. As a result, the conductivity of the positive electrode active material can be improved.

In some embodiments, said positive electrode active material has a lattice change rate of 8% or less, and optionally, the lattice change rate is 4% or less. By reducing the lattice change rate, it allows easier Li ion transport, i.e., Li ions have stronger migration ability in the material, which is conducive to improving the rate performance of batteries. The lattice change rate can be measured by methods known in the art, such as X-ray diffraction mapping (XRD).

In some embodiments, said positive electrode active material has a Li/Mn anti-site defect concentration of 2% or less, optionally the Li/Mn anti-site defect concentration is 0.5% or less. The term Li/Mn anti-site defect refers to interchange of Li⁺ with Mn²⁺ in terms of its site in the LiMnPO₄ lattice. The Li/Mn anti-site defect concentration refers to a percentage of Li⁺ interchanged with Mn²⁺ in the positive electrode active material relative to the total amount of Li⁺. The Mn²⁺ ion having an anti-site defect hinders transport of Li⁺, and by reducing the Li/Mn anti-site defect concentration, it is conducive to improving specific capacity and rate performance of the positive electrode active material. The Li/Mn anti-site defect concentration can be measured by methods known in the art, such as XRD.

In some embodiments, said positive electrode active material has a surface oxygen valence of -1.82 or less, optionally -1.89 to -1.98. By reducing the surface oxygen valence, interfacial side reactions between a positive electrode active material and an electrolytic solution can be mitigated, thereby improving cycling performance and high-temperature stability of batteries. The surface oxygen valence can be measured by methods known in the art, such as by electron energy loss spectroscopy (EELS).

In some embodiments, said positive electrode active material has a compaction density of 2.0 g/cm³ or more, optionally 2.2 g/cm³ or more, at 3T (tonne). The higher the compaction density is, the greater the weight of the positive electrode active material per unit volume is. Thus, increase of the compaction density is conducive to improving volumetric energy density of batteries. Compaction density can be measured according to GB/T 24533-2009.

In some embodiments, said organopolysiloxane compound comprises at least one structural unit shown in Formula 1, 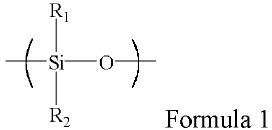 R₁ and R₂ each independently represent H or at least one of the group consisting of the following functional groups: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbon groups, C₁-C₂₀ halogenated aliphatic hydrocarbon group, C₁-C₂₀ heteroaliphatic hydrocarbon groups, C₁-C₂₀ halogenated heteroaliphatic hydrocarbon groups, C₆-C₂₀ aromatic hydrocarbon groups, C₆-C₂₀ halogenated aromatic hydrocarbon groups, C₂-C₂₀ heteroaromatic hydrocarbon groups, and C₂-C₂₀ halogenated heteroaromatic hydrocarbon groups. Optionally, R₁ and R₂ each independently represent H or at least one of the group consisting of the following functional groups: -COOH, -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, and phenyl. More optionally, R₁ and R₂ each independently represent H or at least one of the group consisting of the following functional groups: -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, and C₂-C₈ haloalkenyl groups.

These functional groups can complexate manganese ions and/or react with acidic substances in the electrolytic solution, thereby the leaching out of Mn and Mn-site doping elements, and further improving the cycling performance and/or high-temperature stability of the battery.

When these functional groups are also electron-withdrawing, the Si in the Si-O skeleton of the organopolysiloxane compound is more electron-deficient, thereby further enhancing the affinity with F-containing ions in the electrolytic solution, alleviating the erosion of the surface of the positive electrode active material caused by acidic substances in the electrolytic solution and reducing the leaching out of Mn and Mn-site doping elements, so as to significantly improve the cycling performance and/or high-temperature stability of the battery.

In some embodiments, the organopolysiloxane compound comprises one or more selected from of a linear polysiloxane, and a cyclic polysiloxane, optionally, the organopolysiloxane compound is selected from a linear polysiloxane.

As a result, the erosion of the surface of the positive electrode active material caused by acidic substances in the electrolytic solution can be further alleviated, and the leaching out of Mn and Mn-site doping elements can be reduced, so as to significantly improve the cycling performance and storage performance of the battery. Due to the delocalization of electrons in the ring of the cyclic polysiloxane, the Si-O skeleton of the cyclic polysiloxane has a lower affinity for electron-rich F-containing ions than that of the linear polysiloxane, and thus the removal efficiency of F-containing ions in the electrolytic solution is slightly lower, the effect of reducing the leaching out of Mn and Mn-site doping elements is slightly weak, and the effect of improving the cycling performance of the battery is slightly poor.

In some embodiments, the linear polysiloxane further comprises a capping group. Optionally, the capping group comprises at least one of the group consisting of the following functional groups: polyethers, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, C₆-C₂₀ aromatic hydrocarbon groups, C₁-C₈ alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

In some embodiments, the cyclic polysiloxane has a molecular formula shown in Formula 2, wherein m represents the degree of polymerization of the structural unit shown in Formula 1. Optionally, *m*≤12, *m*≤11, *m*≤10, *m*≤9 or *m*≤8.

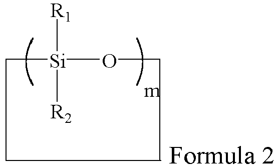

As an example, the linear polysiloxane includes, but is not limited to, one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, terminal epoxy polysiloxane, terminal hydroxyl polydimethylsiloxane, terminal polyether polydimethylsiloxane, pendant aminopropyl polysiloxane, pendant hydroxymethyl polysiloxane, pendant hydroxypropyl polysiloxane, pendant polyether-grafted polydimethylsiloxane, and pendant phosphate-grafted polydimethylsiloxane.

Optionally, the linear polysiloxane comprises one or more of polydimethyl siloxane, polymethyl chloropropyl siloxane, polymethyl trifluoropropyl siloxane, mercaptopropyl polysiloxane, aminoethyl aminopropyl polydimethylsiloxane, terminal hydroxyl polydimethylsiloxane, terminal polyether polydimethylsiloxane, pendant phosphate-grafted polydimethylsiloxane.

As an example, the linear polysiloxane includes, but is not limited to, one or more of cyclic polydimethylsiloxane, cyclic polymethyl vinyl siloxane, cyclic polymethyl hydrosiloxane, and cyclic polymethyl trifluoropropyl siloxane.

Optionally, the cyclic polysiloxane comprises one or more of 1,3,5,7-octamethyl cyclotetrasiloxane, 1,3,5,7-tetrahydro-1,3,5,7-tetramethyl cyclotetrasiloxane, decamethylcyclopentasiloxane, 2,4,6,8-tetramethyl cyclotetrasiloxane, 2,4,6,8-tetramethyl-2,4,6,8-tetravinyl cyclotetrasiloxane, hexadecamethylcyclooctasiloxane, and tetradecamethylcycloheptasiloxane.

In some embodiments, the organopolysiloxane compound has a number average molecular weight of 300,000 or less, such as of 400 to 300000, 400 to 200000, 400 to 100000, 400 to 80000, 400 to 50000, 400 to 20000, 400 to 10000, 1000 to 100000, 1000 to 50000, 1000 to 20000 or 1000 to 10000. The number average molecular weight of the organopolysiloxane compound may be determined by methods known in the art, such as by gel permeation chromatography (GPC). A PL-GPC 220 high temperature gel permeation chromatograph may be used for testing. In the present application, the organopolysiloxane compound may be either an oligomer or a polymer.

When the number average molecular weight of the organopolysiloxane compound is within the suitable ranges, it is possible to combine good dynamic properties and high-temperature stability of the battery. In addition, the following conditions may be effectively avoided: if the number average molecular weight of the organopolysiloxane compound is too small, it may result in poor hydrophobicity, which may not effectively increase the contact angle between the positive film layer and the electrolytic solution, and then may not effectively alleviate the erosion of on the surface of the positive electrode active material caused by the electrolytic solution, resulting in a non-significant improvement of the cycling performance and/or high-temperature stability of the battery; and if the number average molecular weight of the organopolysiloxane compound is too high, it may result in strong hydrophobicity, which may be not conducive to the dispersion of the slurry, thus affecting the improvement effect on the performance of the battery.

In some embodiments, a polar functional group is present in a mass percentage *α* in the organopolysiloxane compound, 0≤*α* < 50%, optionally, 5%≤*α*≤30%.

In the present application, the mass percentage of the polar functional groups in the organopolysiloxane compound means the mass percentage of the polar functional groups in R₁, R₂ and the capping groups in the organopolysiloxane compound. In the present application, the polar functional groups include one or more of -COOH, -OH, -SH, -CN, -SCN, amino groups (including -NH₂, and -NH-), phosphate groups, carboxylate groups (-COO-), amide groups (-CONH-), aldehyde groups (-CHO), sulfonyl groups (-S(=O)₂-), polyether chain segments, halogen atoms, alkoxy groups, and epoxy groups. When the polar functional group mentioned above are directly connected with silicon atoms, *α* represents a mass fraction of these polar functional groups in the organopolysiloxane compound. When the polar functional group mentioned above is not directly connected with silicon atoms, *α* represents the sum of the mass fractions of the polar functional groups and divalent to tetravalent methyl groups (e.g., -CH₂, -CH-, -C-, etc.) directly connected with the polar functional groups in the organopolysiloxane compound. As used herein, the divalent to tetravalent methyl groups represent carbon atoms that are directly connected with the polar functional groups and are located between the polar functional groups and the silicon atoms, and other non-polar functional groups connected with the carbon atoms. In the case of polymethyl trifluoropropyl siloxane, *α* refers to the mass percentage of -CF₃, excluding ethylidene. In the case of polymethyl chloropropyl siloxane, *α* refers to the mass percentage of -CH₂Cl, excluding ethylidene. In the case of hydroxypropyl terminated polydimethylsiloxane, *α* refers to the mass percentage of -CH₂OH. The mass percentage of the polar functional group in the organopolysiloxane compound may be determined by methods known in the art, such as by titration (e.g. acid-base titration, redox titration, precipitation titration), infrared spectroscopy, nuclear magnetic resonance spectroscopy.

When the mass percentage of the polar functional group in the organopolysiloxane compound is within the suitable ranges, it has a better effect on reducing the acidity of the electrolytic solution and removing F ions in the electrolytic solution, thereby better alleviating the erosion of the surface of the positive electrode active material caused by acidic substances in the electrolytic solution, and better improving the cycling performance and/or high-temperature stability of the battery. In addition, the following conditions may be effectively avoided: if the content of the polar functional groups in the organopolysiloxane compound is too high, the effect on reducing the acidity of the electrolytic solution and removing F ions in the electrolytic solution may not be further improved, but a smaller contact angle between the positive electrode film layer and the electrolytic solution may be obtained, thereby resulting in a non-significant improvement of the cycling performance and/or high-temperature stability of the battery.

In some embodiments, the organopolysiloxane compound is present in an amount of 0.01 wt% to 2 wt%, optionally 0.1 wt% to 2 wt%, based on the total weight of the positive electrode material composition. When the amount of the organopolysiloxane compound is within the suitable ranges, it has a better effect on reducing the acidity of the electrolytic solution and removing F ions in the electrolytic solution, thereby better alleviating the erosion of the surface of the positive electrode active material caused by acidic substances in the electrolytic solution, and better improving the cycling performance and/or high-temperature stability of the battery. In addition, the following conditions may be effectively avoided: if the amount of the organopolysiloxane compound is too high, the electrolytic solution infiltration of the positive electrode film layer and the dynamic performance of the battery may be affected, and at the same time, the energy density of the battery may be reduced since the organopolysiloxane compound does not provide a capacity; if the amount of the organopolysiloxane compound is too low, the effect on reducing the acidity of the electrolytic solution and removing F ions in the electrolytic solution is not significant, and the erosion of the surface of the positive electrode active material caused by acidic substances in the electrolytic solution cannot be effectively alleviated, thereby resulting in a non-significant improvement of the cycling performance and/or high-temperature stability of the battery.

In some embodiments, the positive electrode material composition further comprises a binder. The binder may be a substance known in the art to have a bonding effect. Optionally, the binder comprises at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. Optionally, the binder is present in a content of 1.79 wt% to 10 wt%, and optionally 2 wt% to 5 wt%, based on the total weight of the positive electrode material composition.

In some embodiments, the positive electrode material composition further comprises a conductive agent. The conductive agent may be a substance known in the art to have an electron conduction effect. Optionally, the positive conductive agent comprises at least one of superconducting carbon, conductive graphite, acetylene black, carbon black, Ketjen black, carbon dots, carbon nanotubes, graphene, and carbon nanofibers. Optionally, the conductive agent is present in a content of 0.2 wt% to 10 wt%, and optionally 0.5 wt% to 5 wt%, based on the total weight of the positive electrode material composition.

In some embodiments, the positive electrode material composition has a powder resistivity of 4 Ω/cm to 50 Ω/cm, optionally from 4 Ω/cm to 40 Ω/cm at 12MPa. The powder resistivity of the positive electrode material composition in a suitable range enables the battery to have a better dynamic performance. The powder resistivity of the positive electrode material composition may be determined by a method known in the art. For example, according to GB/T 30835-2014, the powder resistivity tester can be used for testing. An exemplary test method includes steps of weighing a certain amount of powder of a sample to be tested in a special mold, setting different pressure, and obtaining the powder resistivity at different pressures. In the present application, the pressure can be set to 12 Mpa. The testing instrument can be Suzhou lattice ST2722-SZ type four probe powder resistivity tester.

In some embodiments, the positive electrode material composition has a specific surface area of 8 m²/g to 20 m²/g, optionally 8 m²/g to 15 m²/g. The specific surface area of the positive electrode material composition in a suitable range can reduce interfacial side reactions between the positive electrode plate using the composition and the electrolytic solution, and reduce the volume expansion of the battery, thereby enabling the battery to have a better electrochemical performance. The specific surface area of the positive electrode material composition can be determined by a method known in the art. For example, according to GB/T 19587-2017, the nitrogen adsorption specific surface area analysis test method can be used for testing, and the BET (BrunauerEmmett Teller) method can be use for calculating. Nitrogen adsorption specific surface area analysis test can be carried out by Micromeritics Tri-Star 3020 specific surface area aperture analysis tester.

### Preparation method

A second aspect of the present application provides a method for preparing the positive electrode material composition according to the first aspect, comprising
Step (1), dissolving a manganese source, a source of element B and an acid in a solvent and stirring them to produce a suspension of a manganese salt doped with element B, filtering the suspension and drying the resulting filter cake to obtain the manganese salt doped with element B;
Step (2), adding a lithium source, a phosphorus source, a source of element A, a source of element C and a source of element D, a solvent and the manganese salt doped with element B obtained from step (1) to a reaction vessel for grinding and mixing to obtain a slurry;
Step (3), transferring the slurry obtained from step (2) to a spray drying equipment for spray drying and granulating to obtain granules;
Step (4), sintering the granules obtained from step (3) to obtain a positive electrode active material;
Step (5), mixing the positive electrode active materialobtained from step (4) with an organopolysiloxane compound, and optionally a conductive agent and a binder, to obtain the positive electrode material composition.

In some embodiments, the source of element A is at least one selected from elemental substance, oxides, phosphates, oxalates, carbonates and sulfates of element A, the source of element B is at least one selected from elemental substance, oxides, phosphates, oxalates, carbonates and sulfates of element B, the source of element C is at least one selected from sulfates, borates, nitrates and silicates of element C, the source of element D is at least one selected from elemental substance and ammonium salts of element D. By selecting the source of each doping element, it is possible to improve distribution uniformity of doping elements, thereby improving performances of the positive electrode active material.

In some embodiments, said acid is one or more selected from hydrochloric acid, sulfuric acid, nitric acid, phosphoric acid, organic acids such as oxalic acid, and the like, which may be oxalic acid, for example. In some embodiments, said acid is a diluted acid with a concentration of 60 wt% or less.

In some embodiments, said manganese source may be a manganese-containing substance known in the art that can be used to prepare lithium manganese phosphate. For example, said manganese source may be one or more selected from elemental manganese, manganese dioxide, manganese phosphate, manganese oxalate, and manganese carbonate.

In some embodiments, said lithium source may be a lithium-containing substance known in the art that can be used to prepare lithium manganese phosphate. For example, said lithium source may be one or more selected from lithium carbonate, lithium hydroxide, lithium phosphate, and lithium dihydrogen phosphate.

In some embodiments, said phosphorus source may be a phosphorus-containing substance known in the art that can be used to prepare lithium manganese phosphate. For example, said phosphorus source may be one or more selected from diammonium hydrogen phosphate, ammonium dihydrogen phosphate, ammonium phosphate and phosphoric acid.

The addition amounts of respective sources of elements A, B, C, and D depends on the target doping amounts, and the ratio of amounts of the lithium, manganese, and phosphorus sources conforms to a stoichiometric ratio.

In some embodiments, the solvents described in step (1) and step (2) may each independently be solvents routinely used by those skilled in the art in the preparation of manganese salts and lithium manganese phosphate, and for example, they may each independently be selected from at least one of ethanol, water (such as deionized water), and the like.

In some embodiments, stirring in step (1) is carried out at a temperature in the range of 60-120°C. In some embodiments, stirring in step (1) is carried out at a rate of 200-800 rpm, or 300-800 rpm, or 400-800 rpm. In some embodiments, stirring in step (1) is carried out for 6-12 hours. In some embodiments, grinding and mixing in step (2) are carried out for 8-15 hours.

By controlling the reaction temperature, stirring rate and mixing time during doping, uniform distribution of doping elements and higher crystallinity of materials after sintering can be achieved, which can enhance specific capacity and rate performance of the positive electrode active material.

In some embodiments, the filter cake in step (1) may be washed prior to drying the filter cake.

In some embodiments, drying in step (1) may be performed in a manner and under a condition known to those skilled in the art. For example, the drying may be carried out at a temperature in the range of 120-300°C. Optionally, the filter cake may be ground into particles after drying, for example, into particles having a median particle size D_{V50} in the range of 50-200 nm. The median particle size D_{V50} refers to a particle size at which said material has a cumulative volume distribution percentage of 50%. In the present application, the median particle size D_{V50} of said material can be determined by laser diffraction particle size analysis. For example with reference to standard GB/T 19077-2016, a laser particle size analyzer (e.g. Malvern Master Size 3000) may be used for determination.

In some embodiments, said step (2) further comprises adding a carbon source to a reaction vessel for grinding and mixing. As a result, the positive electrode active material cladded with carbon can be obtained. Optionally, the carbon source comprises one or a combination of starch, sucrose, glucose, polyvinyl alcohol, polyethylene glycol, and citric acid. The molar ratio of the amount of the carbon source relative to the amount of the lithium source is usually in the range of 0.1% to 5%. The grinding may be carried out by suitable grinding methods known in the art, for example, by sand grinding.

In some embodiments, the temperature and time of spray drying in step (3) may be the temperature and time routinely used in the art for performing spray drying, e.g., 1-6 hours at 100-300°C.

In some embodiments, sintering in step (4) is carried out at a temperature in the range of 600-900°C for 6-14 hours. By controlling the sintering temperature and time, it is possible to control crystallinity of the positive electrode active material and reduce the amount of leaching out of Mn and Mn-site doping elements after cycling, thereby improving high-temperature stability and cycling performance of batteries.

In some embodiments, sintering in step (4) is carried out under a protective atmosphere, wherein said protective atmosphere may be nitrogen, inert gas, hydrogen or a mixture thereof.

### Positive electrode plate

A third aspect of the present application provides a positive electrode plate comprising a positive electrode current collector and a positive electrode film layer provided on at least one surface of the positive electrode current collector, wherein said positive electrode film layer comprises the positive electrode material composition of the first aspect of the present application or the positive electrode material composition prepared by the method of the second aspect of the present application, and said positive electrode material composition is present in said positive electrode film layer in a content of 50 wt% or more, based on the total weight of the positive electrode film layer.

Said positive electrode current collector has two surfaces opposite to each other in the direction of its own thickness, and said positive electrode film layer is provided on either or both of two opposite surfaces of said positive electrode current collector.

In some embodiments, optionally, said positive electrode material composition is present in said positive electrode film layer in a content of 99-100 wt%, based on the total weight of said positive electrode film layer.

The positive electrode film layer does not exclude other positive electrode material compositions than the positive electrode material composition of the first aspect of the present application or the positive electrode material composition prepared by the method of the second aspect of the present application. For example, the positive electrode film may also comprise other positive electrode active materials than the positive active materials mentioned in the present application, optionally, such other positive electrode active materials may comprise at least one of a lithium transition metal oxide and a modified compound thereof. By way of example, said other positive electrode material compositions may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, said positive electrode current collector may be a metal foil or a composite current collector. As an example of a metal foil, an aluminum foil may be used. The composite current collectormay include a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

In some embodiments, a solid-liquid contact angle between the positive electrode film layer and a non-aqueous organic solvent is between 3° and 90°, optionally between 3° and 60°, and more optionally between 10° and 30°. The contact angle in a suitable range enables the battery to have a relatively high energy density, while further improving rate performance, cycling performance and/or high-temperature stability. In addition, the following conditions may be effectively avoided: if the contact angle is too small, it may not effectively alleviate the erosion of the surface of the positive electrode active material caused by the acidic substance in the electrolytic solution, resulting in a non-significant improvement of the cycling performance; and if the contact angle is too large, it may result in a poor electrolytic solution infiltration of the positive electrode film layer, affecting the rate performance and cycling performance of the battery. The solid-liquid contact angle between the positive electrode film layer and the non-aqueous organic solvent has a meaning known in the art and can be determined by a method known in the art, such as, by a method according to GBT 30693-2014. An exemplary test method comprises the following steps: dropping a drop of a non-aqueous organic solvent on the surface of the positive electrode plate at room temperature, and measuring its contact angle over a period of 60 seconds by a contact angle testing instrument. The testing instrument can be LSA 200 optical contact angle testing instrument of LAUDA Scientific company in Germany. The non-aqueous organic solvent may be a non-aqueous organic solvent known in the art used for the non-aqueous electrolytic solution of a secondary battery, optionally, the non-aqueous organic solvent is ethylene carbonate (EC).

In some embodiments, the positive electrode film layer has a porosity of 15% to 50%, and optionally 20% to 40%. The porosity in a suitable range enables the battery to have a relatively high energy density, while further improving rate performance, cycling performance and/or high-temperature stability. In addition, the following conditions may be effectively avoided: if the porosity is too small, it may result in a poor electrolytic solution infiltration of the positive electrode film layer, affecting the rate performance and cycling performance of the battery; and if the porosity is too large, it may affect the overall energy density of the battery. The porosity of the positive electrode film layer has a meaning known in the art and can be determined by a method known in the art, such as, by a method according to GB/T 24586-2009 after stripping the positive electrode film layer with a tape. Porosity P=[(V2-V1)/V2]×100%. V1 (cm³) represents a true volume and can be determined by displacement using an inert gas with a small molecular diameter, such as helium, in combination with Archimedes' principle and Bohr's law, V2 (cm³) represents an apparent volume, V2=S×H×A, S (cm²) represents an area, H (cm) represents a thickness, and A represents a number of samples.

Said positive electrode film layer is usually made by applying a positive electrode slurry to the positive collector followed by drying and cold pressing. Said positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

It should be noted that, all parameters of positive electrode film layer (such as a contact angle, porosity, etc.) given in the present application refer to parameters of the positive electrode film layer on one side of the positive electrode current collector. When the positive electrode film layers are arranged on both sides of the positive electrode current collector, it is considered to fall within the scope of protection of the present application that the parameters of the positive electrode film layer on either side of the collector meet the present application.

In addition, in the above tests for all parameter of the positive electrode film layer, the sample can be obtained during the preparation of the positive electrode plate or the battery, or from a prepared battery. When the sample is obtained from the prepared battery, as an example, the sample can be obtained by the following steps: discharging the battery (generally keeping the battery in a fully discharged state for safety); disassembling the battery and then taking out the positive electrode plate, and soaking the positive electrode plate in dimethyl carbonate (DMC) for a certain period of time (for example, 2-10 hours); then taking out the positive electrode plate and performing a drying treatment at a certain temperature and time (for example, 60 °C for 4 hours), taking out the positive electrode plate after the drying treatment, and at this point, obtaining the sample from the dried positive electrode plate for testing relevant parameters of the positive electrode film layer.

### Secondary Battery

A fourth aspect of the present application provides a secondary battery comprising the positive electrode plate of the third aspect of the present application.

A secondary battery, also known as a rechargeable battery or accumulator, is a battery that can continue to be used by activating its active material by means of charging after the battery has been discharged. Typically, a secondary battery includes an electrode assembly and an electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate.

### [Positive electrode plate]

A positive electrode plate used in the secondary battery of this application is the positive electrode plate described in any one of embodiments of the third aspect of this application.

### [Negative electrode plate]

In some embodiments, said negative electrode plate comprises a negative electrode current collector and a negative electrode film layer provided on at least one surface of said negative electrode current collector and comprising a negative electrode active material. For example, said negative electrode current collector has two surfaces opposite to each other in the direction of its own thickness, and said negative electrode film layer is provided on either or both of two opposite surfaces of said negative electrode current collector.

Said negative electrode active material may be a negative electrode active material known in the art for use in secondary batteries. By way of example, said negative electrode active material includes, but is not limited to, at least one of natural graphite, artificial graphite, soft carbon, hard carbon, silicon-based material, tin-based material, and lithium titanate. Said silicon-based material may include at least one of elemental silicon, a silicon oxide, a silicon carbon composite, a silicon nitrogen composite, a silicon alloy material. Said tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, said negative electrode film layer may also optionally comprise a negative conductive agent. In the present application, the type of said negative conductive agent is not particularly limited and, as an example, said negative conductive agent may include at least one of superconducting carbon, conductive graphite, acetylene black, carbon black, Ketjen black, carbon dots, carbon nanotubes, graphene, and carbon nanofibers.

In some embodiments, said negative electrode film layer may further optionally comprise a negative electrode binder. In the present application, the type of said negative binder is not particularly limited and, as an example, said negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, said negative electrode film layer may optionally also include other additives. As an example, the other additives may include thickeners, e.g., sodium carboxymethyl cellulose (CMC), and PTC thermistor material, etc.

In some embodiments, said negative electrode current collector may be a metal foil or a composite current collector. As an example of a metal foil, a copper foil may be used. The composite current collectormay include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

Said negative electrode film layer is usually made by applying a negative electrode slurry to the negative electrode current collector followed by drying and cold pressing. Said negative electrode slurry is usually formed by dispersing the negative active material, an optional conductive agent, an optional binder, and any other optional additives in a solvent and stirring uniformly. The solvent may be N-methylpyrrolidone (NMP) and deionized water, but is not limited thereto.

Said negative electrode plate does not exclude other additional functional layers than said negative electrode film layer. For example, in some embodiments, the negative electrode plate described in the present application further comprises a conductive primer (e.g. being composed of a conductive agent and a binder) sandwiched between said negative electrode current collector and said negative electrode film layer and disposed on the surface of said negative electrode current collector. In some other embodiments, the negative electrode plate described in this application further comprises a protective layer covering the surface of said negative electrode film layer.

### [Electrolyte]

The type of electrolyte is not specifically restricted in the present application, and can be selected by those skilled in the art according to actual requirements. For example, the electrolyte may be at least one selected from solid electrolyte and liquid electrolyte (i.e., electrolytic solution).

In some embodiments, an electrolytic solution is used as the electrolytic solution. The electrolytic solution includes an electrolyte salt and a solvent.

The type of electrolyte salt is not specifically restricted in the present application, and can be selected by those skilled in the art according to actual requirements. In some embodiments, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

The type of solvent is not specifically restricted in the present application, and can be selected by those skilled in the art according to actual requirements. In some embodiments, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolytic solution may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery.

### [Separator]

In the secondary batteries using an electrolytic solution and some secondary batteries using a solid electrolyte, separators may be further included. The separators are arranged between the positive electrode plate and the negative electrode plate, and mainly function as preventing short circuit of the positive and negative electrodes while allowing active ions to pass through. There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, said positive electrode plate, said separator, and said negative electrode plate may be made into an electrode assembly by a winding process and/or a stacking process.

In some embodiments, said secondary battery may include an outer package. The outer package may be used to encapsulate said electrode assembly and electrolyte.

In some embodiments, said outer package of said secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

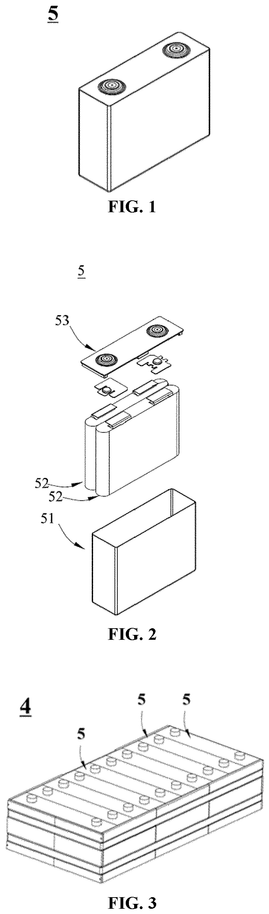

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a separator, a negative electrode plate and an electrolytic solution may be assembled into a secondary battery. As an example, a positive electrode plate, a separator, and a negative electrode plate can be made into an electrode assembly by a winding process or a stacking process, and the electrode assembly can be placed in an outer package and is subjected to drying, to which an electrolytic solution is injected. After vacuum encapsulation, resting, chemical formation, and shaping process, a secondary battery can be obtained.

In some embodiments of the present application, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

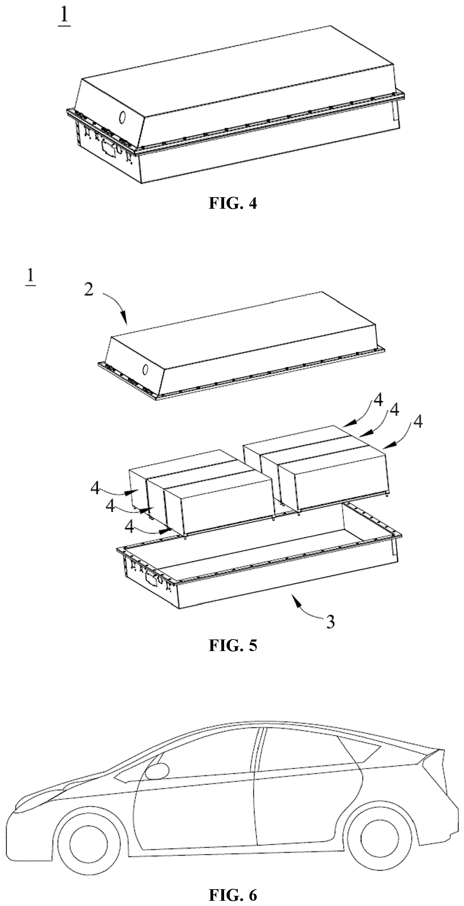

FIGs. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### 1) Preparation of positive electrode active material

Preparation of doped manganese oxalate: 1.3 mol of MnSO₄·H₂O and 0.7 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size D_{V50} of about 100 nm.

Preparation of doped lithium manganese phosphate: 1 mol of the above particles of manganese oxalate, 0.497 mol of lithium carbonate, 0.001 mol of Mo(SO₄)₃, aqueous phosphoric acid solution containing 0.999 mol of phosphoric acid at a concentration of 85%, 0.001 mol of H₄SiO₄, 0.0005 mol of NH₄HF₂ and 0.005 mol of sucrose were added to 20 L of deionized water. The mixture was transferred to a sanding mill and well ground and stirred for 10 hours to obtain a slurry. Said slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.994}Mo_{0.001}Mn_{0.65}Fe_{0.35}P_{0.999}Si_{0.001}O_{3.999}F_{0.001} cladded with carbon, i.e. the positive electrode active material. The content of elements can be detected by inductively coupled plasma emission spectroscopy (ICP).

### 2) Preparation of button battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89.4:5:5:0.6 were stirred in a blender until the materials are evenly mixed to obtain a positive electrode material composition. The positive electrode material composition was added to N-methylpyrrolidone (NMP) and stirred in a drying room to make a slurry. The above slurry was applied to an aluminum foil, dried and cold pressed to form a positive electrode plate. The cladding amount was 0.015g/cm² and the compaction density was 2.0g/cm³.

Lithium plate was used as a negative electrode, a 1 mol/L solution of LiPF₆ in a mixture of ethylene carbonate (EC), diethyl carbonate (DEC) and dimethyl carbonate (DMC) at a volume ratio of 1:1:1 was used as an electrolytic solution, and they were assembled together with the above prepared positive electrode plate in a button battery box to form a button battery (hereinafter also referred to as "button").

### 3) Preparation of full battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93.4:1.5:4.5:0.6 were stirred in a blender until the materials are evenly mixed to obtain a positive electrode material composition. The positive electrode material composition was mixed evenly in N-methylpyrrolidone as a solvent system to form a slurry. The above slurry was applied to on aluminum foil and dried and cold pressed to obtain a positive electrode plate. The cladding amount was 0.018g/cm² and the compaction density was 2.4g/cm³.

An artificial graphite and a hard carbon as a negative electrode active material, acetylene black as a conductive agent, butadiene rubber (SBR) as a binder, and sodium carboxymethyl cellulose (CMC) as a thickener were mixed in deionized water in a weight ratio of 90:5:2:2:1 to form a slurry, and then the slurry was applied to a copper foil and dried and cold pressed to obtain a negative electrode plate. The cladding amount was 0.0075g/cm² and the compaction density was 1.7g/cm³.

A porous polymer film of polyethylene (PE) was used as a separator. The positive electrode plate, separator and negative electrode plate were stacked in order, so that the separator was sandwiched between the positive and negative electrodes for isolation, and then they were wound to form an electrode assembly. The electrode assembly was placed in an outer package, filled with the same electrolytic solution as that in the above-mentioned preparation of button battery, and encapsulated to obtain a full battery.

### Examples 2-27

Examples 2-27 were the same as Example 1 for "2) Preparation of button battery" and "3) Preparation of full battery", except for "1) Preparation of positive electrode active material".

### Example 2

1) Preparation of positive electrode active material: Example 2 was the same as Example 1, with the exception that, the amount of Li₂CO₃ was adjusted to 0.4885 mol, Mo(SO₄)₃ was replaced with MgSO₄, the amount of FeSO₄·H₂O was adjusted to 0.68 mol, 0.02 mol of Ti(SO₄)₂ was added in the preparation of doped manganese oxalate, and H₄SiO₄ was replaced with HNO₃.

### Example 3

1) Preparation of positive electrode active material: Example 3 was the same as Example 1, with the exception that, the amount of Li₂CO₃ was adjusted to 0.496 mol, Mo(SO₄)₃ was replaced with W(SO₄)₃, and H₄SiO₄ was replaced with H₂SO₄.

### Example 4

1) Preparation of positive electrode active material: Example 4 was the same as Example 1, with the exception that, the amount of Li₂CO₃ was adjusted to 0.4985 mol, 0.001 mol of Mo(SO₄)₃ was replaced with 0.0005 mol of Al₂(SO₄)₃, and NH₄HF₂ was replaced with NH₄HCl₂.

### Example 5

1) Preparation of positive electrode active material: Example 5 was the same as Example 1, with the exception that, the amount of FeSO₄·H₂O was adjusted to 0.69 mol, 0.01 mol of VCl₂ was added in the preparation of doped manganese oxalate, the amount of Li₂CO₃ was adjusted to 0.4965 mol, 0.001 mol of Mo(SO₄)₃ was replaced with 0.0005 mol of Nb₂(SO₄)₅ and H₄SiO₄ was replaced with H₂SO₄.

### Example 6

1) Preparation of positive electrode active material: Example 6 was the same as Example 1, with the exception that, the amount of FeSO₄·H₂O was adjusted to 0.68 mol, 0.01 mol of VCl₂ and 0.01 mol of MgSO₄ were added in the preparation of doped manganese oxalate, the amount of Li₂CO₃ was adjusted to 0.4965 mol, 0.001 mol of Mo(SO₄)₃ was replaced with 0.0005 mol of Nb₂(SO₄)₅ and H₄SiO₄ was replaced with H₂SO₄.

### Example 7

1) Preparation of positive electrode active material: Example 7 was the same as Example 6, with the exception that, MgSO₄ was replaced with CoSO₄.

### Example 8

1) Preparation of positive electrode active material: Example 8 was the same as Example 6, with the exception that, MgSO₄ was replaced with NiSO₄.

### Example 9

1) Preparation of positive electrode active material: Example 9 was the same as Example 1, with the exception that, the amount of FeSO₄·H₂O was adjusted to 0.698 mol, 0.002 mol of Ti(SO₄)₂ was added in the preparation of doped manganese oxalate, the amount of Li₂CO₃ was adjusted to 0.4955 mol, and 0.001 mol of Mo(SO₄)₃ was replaced with 0.0005 mol of Nb₂(SO₄)₅, H₄SiO₄ was replaced with H₂SO₄, and NH₄HF₂ was replaced with NH₄HCl₂.

### Example 10

1) Preparation of positive electrode active material: Example 10 was the same as Example 1, with the exception that, the amount of FeSO₄·H₂O was adjusted to 0.68 mol, 0.01 mol of VCl₂ and 0.01 mol of MgSO₄ were added in the preparation of doped manganese oxalate, the amount of Li₂CO₃ was adjusted to 0.4975 mol, 0.001 mol of Mo(SO₄)₃ was replaced with 0.0005 mol of Nb₂(SO₄)₅, and NH₄HF₂ was replaced with NH₄HBr₂.

### Example 11

1) Preparation of positive electrode active material: Example 11 was the same as Example 1, with the exception that, the amount of FeSO₄·H₂O was adjusted to 0.69 mol, 0.01 mol of VCl₂ was added in the preparation of doped manganese oxalate, the amount of Li₂CO₃ was adjusted to 0.499 mol, Mo(SO₄)₃ was replaced with MgSO₄, and NH₄HF₂ was replaced with NH₄HBr₂.

### Example 12

1) Preparation of positive electrode active material: Example 12 was the same as Example 1, with the exception that, the amount of MnSO₄·H₂O was adjusted to 1.36 mol, the amount of FeSO₄·H₂O was adjusted to 0.6 mol, 0.04 mol of VCl₂ was added in the preparation of doped manganese oxalate, the amount of Li₂CO₃ was adjusted to 0.4985 mol, and Mo(SO₄)₃ was replaced with MgSO₄, and H₄SiO₄ was replaced with HNO₃.

### Example 13

1) Preparation of positive electrode active material: Example 13 was the same as Example 12, with the exception that, the amount of MnSO₄·H₂O was adjusted to 1.16 mol, and the amount of FeSO₄·H₂O was adjusted to 0.8 mol.

### Example 14

1) Preparation of positive electrode active material: Example 14 was the same as Example 12, with the exception that, the amount of MnSO₄·H₂O was adjusted to 1.3 mol, and the amount of VCl₂ was adjusted to 0.1 mol.

### Example 15

1) Preparation of positive electrode active material: Example 15 was the same as Example 1, with the exception that, the amount of MnSO₄·H₂O was adjusted to 1.2 mol, 0.1 mol of VCl₂ was added in the preparation of doped manganese oxalate, the amount of Li₂CO₃ was adjusted to 0.494 mol, and 0.001 mol of Mo(SO₄)₃ was replaced with 0.005 mol of MgSO₄, and H₄SiO₄ was replaced with H₂SO₄.

### Example 16

1) Preparation of positive electrode active material: Example 16 was the same as Example 1, with the exception that, the amount of MnSO₄·H₂O was adjusted to 1.2 mol, 0.1 mol of VCl₂ was added in the preparation of doped manganese oxalate, the amount of Li₂CO₃ was adjusted to 0.467 mol, and 0.001 mol of Mo(SO₄)₃ was replaced with 0.005 mol of MgSO₄, 0.001 mol of H₄SiO₄ was replaced with 0.005 mol of H₂SO₄ and 1.175 mol of phosphoric acid with a concentration of 85% was replaced with 1.171 mol of phosphoric acid with a concentration of 85%.

### Example 17

1) Preparation of positive electrode active material: Example 17 was the same as Example 1, with the exception that, the amount of MnSO₄·H₂O was adjusted to 1.2 mol, 0.1 mol of VCl₂ was added in the preparation of doped manganese oxalate, the amount of Li₂CO₃ was adjusted to 0.492 mol, and 0.001 mol of Mo(SO₄)₃ was replaced with 0.005 mol of MgSO₄, H₄SiO₄ was replaced with H₂SO₄ and the amount of NH₄HF₂ was adjusted to 0.0025 mol.

### Example 18

1) Preparation of positive electrode active material: Example 18 was the same as Example 1, with the exception that, the amount of FeSO₄·H₂O was adjusted to 0.5 mol, 0.1 mol of VCl₂ and 0.1 mol of CoSO₄ were added in the preparation of doped manganese oxalate, the amount of Li₂CO₃ was adjusted to 0.492 mol, and 0.001 mol of Mo(SO₄)₃ was replaced with 0.005 mol of MgSO₄, H₄SiO₄ was replaced with H₂SO₄ and the amount of NH₄HF₂ was adjusted to 0.0025 mol.

### Example 19

1) Preparation of positive electrode active material: Example 19 was the same as Example 18, with the exception that, the amount of FeSO₄·H₂O was adjusted to 0.4 mol, and the amount of CoSO₄ was adjusted to 0.2 mol.

### Example 20

1) Preparation of positive electrode active material: Example 20 was the same as Example 18, with the exception that, the amount of MnSO₄·H₂O was adjusted to 1.5 mol, the amount of FeSO₄·H₂O was adjusted to 0.1 mol, and the amount of CoSO₄ was adjusted to 0.3 mol.

### Example 21

1) Preparation of positive electrode active material: Example 21 was the same as Example 18, with the exception that, 0.1 mol of CoSO₄ was replaced with 0.1 mol of NiSO₄.

### Example 22

1) Preparation of positive electrode active material: Example 22 was the same as Example 18, with the exception that, the amount of MnSO₄·H₂O was adjusted to 1.5 mol, the amount of FeSO₄·H₂O was adjusted to 0.2 mol, and 0.1 mol of CoSO₄ was replaced with 0.2 mol of NiSO₄.

### Example 23

1) Preparation of positive electrode active material: Example 23 was the same as Example 18, with the exception that, the amount of MnSO₄·H₂O was adjusted to 1.4 mol, the amount of FeSO₄·H₂O was adjusted to 0.3 mol, and the amount of CoSO₄ was adjusted to 0.2 mol.

### Example 24

1) Preparation of positive electrode active material: Example 24 was the same as Example 1, with the exception that, the amount of MnSO₄·H₂O was adjusted to 1.2 mol, the amount of FeSO₄·H₂O was adjusted to 0.5 mol, 0.1 mol of VCl₂ and 0.2 mol of CoSO₄ were added in the preparation of doped manganese oxalate, the amount of Li₂CO₃ was adjusted to 0.497 mol, and 0.001 mol of Mo(SO₄)₃ was replaced with 0.005 mol of MgSO₄, H₄SiO₄ was replaced with H₂SO₄ and the amount of NH₄HF₂ was adjusted to 0.0025 mol.

### Example 25

1) Preparation of positive electrode active material: Example 25 was the same as Example 18, with the exception that, the amount of MnSO₄·H₂O was adjusted to 1.0 mol, the amount of FeSO₄·H₂O was adjusted to 0.7 mol, and the amount of CoSO₄ was adjusted to 0.2 mol.

### Example 26

1) Preparation of positive electrode active material: Example 26 was the same as Example 1, with the exception that, the amount of MnSO₄·H₂O was adjusted to 1.4 mol, the amount of FeSO₄·H₂O was adjusted to 0.3 mol, 0.1 mol of VCl₂ and 0.2 mol of CoSO₄ were added in the preparation of doped manganese oxalate, the amount of Li₂CO₃ was adjusted to 0.4825 mol, and 0.001 mol of Mo(SO₄)₃ was replaced with 0.005 mol of MgSO₄, the amount of H₄SiO₄ was adjusted to 0.1 mol, the amount of phosphoric acid was adjusted to 0.9 mol and the amount of NH₄HF₂ was adjusted to 0.04 mol.

### Example 27

1) Preparation of positive electrode active material: Example 27 was the same as Example 1, with the exception that, the amount of MnSO₄·H₂O was adjusted to 1.4 mol, the amount of FeSO₄·H₂O was adjusted to 0.3 mol, 0.1 mol of VCh and 0.2 mol of CoSO₄ were added in the preparation of doped manganese oxalate, the amount of Li₂CO₃ was adjusted to 0.485 mol, and 0.001 mol of Mo(SO₄)₃ was replaced with 0.005 mol of MgSO₄, the amount of H₄SiO₄ was adjusted to 0.08 mol, the amount of phosphoric acid was adjusted to 0.92 mol and the amount of NH₄HF₂ was adjusted to 0.05 mol.

### Examples 28-32

Examples 28-32 were the same as Example 1 except for the weight percentage of aminoethyl aminopropyl polydimethylsiloxane in the positive electrode material composition in "2) Preparation of button battery" and "3) Preparation of full battery".

### Example 28

### 2) Preparation of button battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89.99:5:5:0.01 were stirred in a blender until the materials are evenly mixed to obtain a positive electrode material composition.

### 3) Preparation of full battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93.99:1.5:4.5:0.01 were stirred in a blender until the materials are evenly mixed to obtain a positive electrode material composition.

### Example 29

### 2) Preparation of button battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89.9:5:5:0.1 were stirred in a blender until the materials are evenly mixed to obtain a positive electrode material composition.

### 3) Preparation of full battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93.9:1.5:4.5:0.1 were stirred in a blender until the materials are evenly mixed to obtain a positive electrode material composition.

### Example 30

### 2) Preparation of button battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89:5:5:1 were stirred in a blender until the materials are evenly mixed to obtain a positive electrode material composition.

### 3) Preparation of full battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93:1.5:4.5:1 were stirred in a blender until the materials are evenly mixed to obtain a positive electrode material composition.

### Example 31

### 2) Preparation of button battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 88:5:5:2 were stirred in a blender until the materials are evenly mixed to obtain a positive electrode material composition.

### 3) Preparation of full battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 92:1.5:4.5:2 were stirred in a blender until the materials are evenly mixed to obtain a positive electrode material composition.

### Example 32

### 2) Preparation of button battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 86:5:5:4 were stirred in a blender until the materials are evenly mixed to obtain a positive electrode material composition.

### 3) Preparation of full battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 90:1.5:4.5:4 were stirred in a blender until the materials are evenly mixed to obtain a positive electrode material composition.

### Examples 33-50

Examples 33-50 were the same as Example 1, with the exception that aminoethyl aminopropyl polydimethylsiloxane in the positive electrode material composition was replaced with the following organopolysiloxane compounds, respectively in "2) Preparation of button battery" and "3) Preparation of full battery".

Example 33: Polydimethyl siloxane (having a mass percentage *α* of the polar functional group of about 0%, and a number average molecular weight of 1200).

Example 34: Polymethyl chloropropyl siloxane (having a polar functional group CH₂Cl, a mass percentage *α* of 30.2%, and a number average molecular weight of 2500).

Example 35: Polymethyl trifluoropropyl siloxane (having a polar functional group - CF₃, a mass percentage *α* of 44.0%, and a number average molecular weight of 1400).

Example 36: Mercaptopropyl polysiloxane (having a polar functional group -CH₂SH, a mass percentage *α* of about 15.0%, and a molecular weight per number 2000).

Example 37: Terminal hydroxyl polydimethylsiloxane (having a polar functional group -OH, a mass percentage *α* of about 3.4%, and a number average molecular weight of 1000).

Example 38: Methoxy terminated polydimethylsiloxane (having a polar functional group of methoxy, a mass percentage *α* of about 3.1%, and a number average molecular weight of 2800).

Example 39: Terminal polyether polydimethylsiloxane (having a polar functional group of a polyether chain segment, a mass percentage *α* of about 10.0%, and a number average molecular weight of 2110).

Example 40: Pendant phosphate-grafted polydimethylsiloxane (having a polar functional group of a phosphate group, a mass percentage *α* of about 1.4%, and a number average molecular weight of 15600).

Example 41: 1,3,5,7-octamethyl cyclotetrasiloxane (having a mass percentage *α* of the polar functional group of about 0%, and a molecular weight of 280).

Example 42: Decamethylcyclopentasiloxane (having a mass percentage *α* of the polar functional group of about 0%, and a molecular weight of 370).

Example 43: Terminal polyether polydimethylsiloxane (having a polar functional group of a polyether chain segment, a mass percentage *α* of about 55.0%, and a number average molecular weight of 25132).

Example 44: Polydimethylsiloxane (having a mass percentage *α* of the polar functional group of about 0%, and a number average molecular weight of 400).

Example 45: Polydimethylsiloxane (having a mass percentage *α* of the polar functional group of about 0%, and a number average molecular weight of 10000).

Example 46: Polydimethylsiloxane (having a mass percentage *α* of the polar functional group of about 0%, and a number average molecular weight of 50000).

Example 47: Polydimethylsiloxane (having a mass percentage *α* of the polar functional group of about 0%, and a number average molecular weight of 80000).

Example 48: Polydimethylsiloxane (having a mass percentage *α* of the polar functional group of about 0%, and a number average molecular weight of 100000).

Example 49: Polydimethylsiloxane (having a mass percentage *α* of the polar functional group of about 0%, and a number average molecular weight of 300,000).

Example 50: Polydimethylsiloxane (having a mass percentage *α* of the polar functional group of about 0%, and a number average molecular weight of 400000).

### Comparative Example 1

### 1) Preparation of positive electrode active material

Preparation of manganese oxalate: 1 mol of MnSO₄·H₂O was added to a reaction kettle and 10 L of deionized water and 1 mol of oxalic acid dihydrate (as oxalic acid) were added. The reaction kettle was heated to 80°C and stirred at 600 rpm for 6 h. The reaction ended (no bubbles were generated) to obtain a suspension of manganese oxalate. Then the suspension was filtered and the resulting filter cake was dried at 120°C, after which it was ground to obtain particles of manganese oxalate with a median particle size D_{V50} of 50-200 nm.

Preparation of lithium manganese phosphate: 1 mol of the above particles of manganese oxalate, 0.5 mol of lithium carbonate, aqueous phosphoric acid solution containing 1 mol of 85% phosphoric acid, and 0.005 mol of sucrose were added to 20 L of deionized water. The mixture was transferred to a sanding mill and well ground and stirred for 10 hours to obtain a slurry. Said slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain LiMnPO₄ cladded with carbon.

### 2) Preparation of button battery

Comparative example 1 was the same as Example 1 except that no aminoethyl aminopropyl polydimethylsiloxane was added.

### 3) Preparation of full battery

Comparative example 1 was the same as Example 1 except that no aminoethyl aminopropyl polydimethylsiloxane was added.

### Comparative Example 2

### 1) Preparation of positive electrode active material

Comparative Example 2 was the same as Comparative Example 1, with the exception that 1 mol of MnSO₄·H₂O was replaced with 0.85 mol of MnSO₄·H₂O and 0.15 mol of FeSO₄·H₂O, and MnSO₄·H₂O and FeSO₄·H₂O were mixed thoroughly in a mixer for 6 hours and then transferred to a reaction kettle.

### 2) Preparation of button battery

Comparative example 2 was the same as Example 1 except that no aminoethyl aminopropyl polydimethylsiloxane was added.

### 3) Preparation of full battery

Comparative example 2 was the same as Example 1 except that no aminoethyl aminopropyl polydimethylsiloxane was added.

### Comparative Example 3

### 1) Preparation of positive electrode active material

Comparative Example 3 was the same as Example 1, with the exception that, the amount of MnSO₄·H₂O was adjusted to 1.9 mol, 0.7 mol of FeSO₄·H₂O was replaced with 0.1 mol of ZnSO₄, the amount of Li₂CO₃ was adjusted to 0.495 mol, 0.001 mol of Mo(SO₄)₃ was replaced with 0.005 mol of MgSO₄, the amount of phosphoric acid was adjusted to 1 mol, and neither H₄SiO₄ nor NH₄HF₂ was added.

### 2) Preparation of button battery

Comparative example 3 was the same as Example 1 except that no aminoethyl aminopropyl polydimethylsiloxane was added.

### 3) Preparation of full battery

Comparative example 3 was the same as Example 1 except that no aminoethyl aminopropyl polydimethylsiloxane was added.

### Comparative Example 4

### 1) Preparation of positive electrode active material

Comparative Example 4 was the same as Example 1, with the exception that, the amount of MnSO₄·H₂O was adjusted to 1.2 mol, the amount of FeSO₄·H₂O was adjusted to 0.8 mol, the amount of Li₂CO₃ was adjusted to 0.45 mol, 0.001 mol of Mo(SO₄)₃ was replaced with 0.005 mol of Nb₂(SO₄)₅, the amount of phosphoric acid was adjusted to 1 mol, the amount of NH₄HF₂ was adjusted to 0.025 mol and no H₄SiO₄ was added.

### 2) Preparation of button battery

Comparative example 4 was the same as Example 1 except that no aminoethyl aminopropyl polydimethylsiloxane was added.

### 3) Preparation of full battery

Comparative example 4 was the same as Example 1 except that no aminoethyl aminopropyl polydimethylsiloxane was added.

### Comparative Example 5

### 1) Preparation of positive electrode active material

Comparative Example 5 was the same as Example 1, with the exception that, the amount of MnSO₄·H₂O was adjusted to 1.4 mol, the amount of FeSO₄·H₂O was adjusted to 0.6 mol, the amount of Li₂CO₃ was adjusted to 0.38 mol, and 0.001 mol of Mo(SO₄)₃ was replaced with 0.12 mol of MgSO₄.

### 2) Preparation of button battery

Comparative example 5 was the same as Example 1 except that no aminoethyl aminopropyl polydimethylsiloxane was added.

### 3) Preparation of full battery

Comparative example 5 was the same as Example 1 except that no aminoethyl aminopropyl polydimethylsiloxane was added.

### Comparative Example 6

### 1) Preparation of positive electrode active material

Comparative Example 6 was the same as Example 1, with the exception that, the amount of MnSO₄·H₂O was adjusted to 0.8 mol, 0.7 mol of FeSO₄·H₂O was replaced with 1.2 mol of ZnSO₄, the amount of Li₂CO₃ was adjusted to 0.499 mol, and 0.001 mol of Mo(SO₄)₃ was replaced with 0.001 mol of MgSO₄.

### 2) Preparation of button battery

Comparative example 6 was the same as Example 1 except that no aminoethyl aminopropyl polydimethylsiloxane was added.

### 3) Preparation of full battery

Comparative example 6 was the same as Example 1 except that no aminoethyl aminopropyl polydimethylsiloxane was added.

### Comparative Example 7

### 1) Preparation of positive electrode active material

Comparative Example 7 was the same as Example 1, with the exception that, the amount of MnSO₄·H₂O was adjusted to 1.4 mol, 0.001 mol of Mo(SO₄)₃ was replaced with 0.001 mol of MgSO₄, the amount of phosphoric acid was adjusted to 0.88 mol, the amount of H₄SiO₄ was adjusted to 0.12 mol, and the amount of NH₄HF₂ was adjusted to 0.025 mol.

### 2) Preparation of button battery

Comparative example 7 was the same as Example 1 except that no aminoethyl aminopropyl polydimethylsiloxane was added.

### 3) Preparation of full battery

Comparative example 7 was the same as Example 1 except that no aminoethyl aminopropyl polydimethylsiloxane was added.

### Comparative Example 8

### 1) Preparation of positive electrode active material

Comparative Example 8 was the same as Example 1, with the exception that, the amount of MnSO₄·H₂O was adjusted to 1.2 mol, the amount of FeSO₄·H₂O was adjusted to 0.8 mol, the amount of Li₂CO₃ was adjusted to 0.474 mol, 0.001 mol of Mo(SO₄)₃ was replaced with 0.001 mol of MgSO₄, the amount of phosphoric acid was adjusted to 0.93 mol, the amount of H₄SiO₄ was adjusted to 0.07 mol, and the amount of NH₄HF₂ was adjusted to 0.06 mol.

### 2) Preparation of button battery

Comparative example 8 was the same as Example 1 except that no aminoethyl aminopropyl polydimethylsiloxane was added.

### 3) Preparation of full battery

Comparative example 8 was the same as Example 1 except that no aminoethyl aminopropyl polydimethylsiloxane was added.

### Comparative Example 9

Comparative Example 9 was the same as Example 1, with the exception that in "2) Preparation of button battery" and "3) Preparation of full battery", no aminoethyl aminopropyl polydimethylsiloxane was added.

### Test methods for performance of positive electrode active materials, positive electrode material compositions, positive electrode plates, and batteries

### 1. Measurement method for lattice change rate

Under a constant temperature environment of 25°C, a positive electrode active material sample was placed in an X-ray diffractometer (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

With the preparation method of a button battery in the above Example, the positive electrode active material samples each were prepared into a button battery. The button battery was charged at a small rate of 0.05C until the current decreased to 0.01C. Then the positive electrode plate was taken out of the button battery and soaked in DMC for 8 hours. After drying and scraping the powder off, the particles with a particle size less than 500 nm were screened out. A sample was taken and its lattice constant v1 was calculated in the same way as the fresh sample was tested above. (v0-v1)/v0 ×100% representing the lattice change rate of before and after complete de-intercalation and intercalation of lithium was shown in the table.

### 2. Measurement method for Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 3. Measurement method for surface oxygen valence

5g of the positive electrode active material samples each were taken and prepared into a button battery according to the preparation method of button battery described in the above Example. The button battery was charged at a low rate of 0.05C until the current decreased to 0.01C. Then the positive electrode plate was taken out of the button battery and soaked in DMC for 8 hours. After drying and scraping the powder off, the particles with a particle size less than 500 nm were screened out. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 4. Measurement method for compaction density

5g of positive electrode active material powders were taken and placed in a special mold for compaction (CARVER mold in the United States, model 13mm), and then the mold was placed on a compaction density instrument. 3T (tonne) of pressure was applied and the thickness of the powders under pressure was read on the equipment (the thickness after pressure relief, the area of the container used for testing being 1540.25mm²). The compaction density was calculated via ρ= m/v.

### 5. Test of powder resistivity

An appropriate amount of the positive electrode material composition powder used for preparing a full battery was taken and placed in a special mold of a powder resistivity tester. Pressure was setted, and the powder resistivity at different pressures was obtained. In the present application, the pressure can be set to 12 Mpa. The testing instrument can be Suzhou lattice ST2722-SZ type four probe powder resistivity tester.

### 6. Test of specific surface area

5g of the positive electrode material composition powder used for preparing a full battery was taken. The specific surface area was tested by Micromeritics Tri-Star 3020 specific surface area aperture analysis tester. A method for calculating the specific surface area is BET (BrunauerEmmett Teller) method.

### 7. Test of contact angle

A drop of ethylene carbonate (EC) was dropped on the surface of the positive electrode film layer at room temperature. The solid-liquid contact angle over a period of 60 seconds was measured by LSA 200 optical contact angle testing instrument of LAUDA Scientific company in Germany.

### 8. Measurement method for initial specific capacity of a button battery

At a constant temperature of 25°C, a button battery was charged to 4.3V at 0.1C, then charged at a constant voltage of 4.3V until the current was less than or equal to 0.05 mA, then rested for 5 minutes. Then the button battery was discharged at 0.1C to 2.0V. The discharge capacity measured at this moment was the initial specific capacity, denoted as D0.

### 9. Measurement method for 3C charging constant current ratio

Under a constant temperature environment of 25°C, a fresh full battery rested for 5 minutes and was discharged at a rate of 1/3C to 2.5V, and was rested for 5 minutes and charged at 1/3C to 4.3V, and then charged at a constant voltage at 4.3V until the current was less than or equal to 0.05 mA. The full battery was rested for 5 minutes, then the charging capacity at this moment was reported as C0. The full battery was discharged at 1/3C to 2.5V, rested for 5 minutes, then was charged at 3C to 4.3V, rested for 5 minutes. The charging capacity at this moment was reported as C1. The 3C charging constant current ratio was C1/C0 × 100%.

The higher the 3C charging constant current ratio, the better the rate performance of the battery.

### 10. Test of gas expansion at 60°C of full battery

A full battery with 100% state of charge (SOC) was stored at 60°C. Before, during and after storage, the open circuit voltage (OCV) and AC internal impedance (IMP) of the battery were tested to monitor SOC and the volume of the battery was measured. After every 48 hours of storage, the full battery was taken out of and rested for 1 hour, and then the open circuit voltage (OCV) and internal impedance (IMP) were tested. After cooling to room temperature, the volume of the battery was measured using the drainage method. The drainage method included measuring the gravity F₁ of the battery separately with a balance that can automatically perform unit conversion with the dial data, and then placing the battery completely in deionized water (with the density of 1g/cm³), measuring the gravity F₂ of the battery at this moment wherein the buoyant force F_{b} of the battery was F₁-F₂, and then according to the Archimedes principle F_{b} = ρ× g × V, the volume of battery was calculated: V=( F₁-F₂)/(ρ×g).

From the OCV and IMP test results, it can be seen that the battery maintains a SOC of 99% or higher throughout the testing process until the end of storage.

After 30 days of storage, the volume of battery was measured, and the percentage increase in battery volume after storage compared to the previous battery volume was calculated.

### 11. Test of cycle performance at 45 °C of full battery

Under a constant temperature environment of 45°C, a full battery was charged at 1C to 4.3V, and then charged at a constant voltage at 4.3V until the current was less than or equal to 0.05 mA. The full battery rested for 5 minutes, then discharged at 1C to 2.5V. The discharging capacity at this moment was reported as E0. The above charging-discharging cycle was repeated until the discharging capacity was reduced to 80% of E0. The number of cycles the battery had undergone at this moment was reported.

### 12. Measurement method for leaching out of Mn (and Fe doped at Mn site) after cycling

At 45 °C, a full battery with capacity reduced to 80% was discharged to 2.0 V of cutoff voltage at a rate of 0.1 C. Then the battery was disassembled, and the negative electrode plate was taken out. 30 discs of unit areas (1540.25mm²) were randomly taken from the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycling was calculated. The testing standard was based on EPA-6010D-2014.

### 13. Determination of the chemical formula of positive electrode active material

The internal microstructure and surface structure of the positive electrode active material were characterized with high spatial resolution by the spherical Aberration Corrected Scanning Transmission Electron Microscope (ACSTEM). By combining with the three-dimensional reconstruction technology, the chemical formula of the positive electrode active material were obtained.

Table 1 shows the composition of the positive electrode active material in Examples 1-11 and Comparative Examples 1-9.

Table 2 shows the composition of the positive electrode active material in Examples 12-27.

Table 3 shows types and contents of organopolysiloxane compounds in the positive electrode material composition of Examples 1-52.

Table 4 shows the performance results measured by the above performance testing methods for the positive electrode active material, positive electrode material composition, positive electrode plate, button battery or full battery of Examples 1-11 and Comparative Examples 1-9.

Table 5 shows the performance results measured by the above performance testing methods for the positive electrode active material, positive electrode material composition, positive electrode plate, button battery or full battery of Examples 12-27.

Table 6 shows the performance results measured by the above performance testing methods for the positive electrode material composition, positive electrode plate, button battery or full battery of Examples 28-50.

**Table 1**

| No. | Positive electrode active material |
|---|---|
| Comparative Example 1 | LiMnPO₄ |
| Comparative Example 2 | LiMn_{0.85}Fe_{0.15}PO₄ |
| Comparative Example 3 | Li_{0.990}Mg_{0.005}Mn_{0.95}Zn_{0.05}PO₄ |
| Comparative Example 4 | Li_{0.90}Nb_{0.01}Mn_{0.6}Fe_{0.4}PO_{3.95}F_{0.05} |
| Comparative Example 5 | Li_{0.76}Mg_{0.12}Mn_{0.7}Fe_{0.3}P_{0.999}Si_{0.001}O_{3.999}F_{0.001} |
| Comparative Example 6 | Li_{0.998}Mg_{0.001}Mn_{0.4}Zn_{0.6}P_{0.999}Si_{0.001}O_{3.999}F_{0.001} |
| Comparative Example 7 | Li_{1.068}Mg_{0.001}Mn_{0.7}Fe_{0.3}P_{0.88}Si_{0.12}O_{3.95}F_{0.05} |
| Comparative Example 8 | Li_{0.948}Mg_{0.001}Mn_{0.6}Fe_{0.4}P_{0.93}Si_{0.07}O_{3.88}F_{0.12} |
| Comparative Example 9 | Li_{0.994}Mo_{0.001}Mn_{0.65}Fe_{0.35}P_{0.999}Si_{0.001}O_{3.999}F_{0.001} |
| Example 1 | Li_{0.994}Mo_{0.001}Mn_{0.65}Fe_{0.35}P_{0.999}Si_{0.001}O_{3.999}F_{0.001} |
| Example 2 | Li_{0.977}Mg_{0.001}Mn_{0.65}Fe_{0.34}Ti_{0.01}P_{0.999}N_{0.001}O_{3.999}F_{0.001} |
| Example 3 | Li_{0.992}W_{0.001}Mn_{0.65}Fe_{0.35}P_{0.999}S_{0.001}O_{3.999}F_{0.001} |
| Example 4 | Li_{0.997}Al_{0.001}Mn_{0.65}Fe_{0.35}P_{0.999}Si_{0.001}O_{3.999}Cl_{0.001} |
| Example 5 | Li_{0.993}Nb_{0.001}Mn_{0.65}Fe_{0.345}V_{0.005}P_{0.999}S_{0.001}O_{3.999}F_{0.001} |
| Example 6 | Li_{0.993}Nb_{0.001}Mn_{0.65}Fe_{0.34}V_{0.005}Mg_{0.005}P_{0.999}S_{0.001}O_{3.999}F_{0.001} |
| Example 7 | Li_{0.993}Nb_{0.001}Mn_{0.65}Fe_{0.34}V_{0.005}Co_{0.005}P_{0.999}S_{0.001}O_{3.999}F_{0.001} |
| Example 8 | Li_{0.993}Nb_{0.001}Mn_{0.65}Fe_{0.34}V_{0.005}Ni_{0.005}P_{0.999}S_{0.001}O_{3.999}F_{0.001} |
| Example 9 | Li_{0.991}Nb_{0.001}Mn_{0.65}Fe_{0.349}Ti_{0.001}P_{0.999}S_{0.001}O_{3.999}Cl_{0.001} |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} |
| Example 11 | Li_{0.998}Mg_{0.001}Mn_{0.65}Fe_{0.345}V_{0.005}P_{0.999}Si_{0.001}O_{3.999}Br_{0.001} |

**Table 2**

| No. | Positive electrode active material | (1-*y*):*y* | *a*:*x* |
|---|---|---|---|
| Example 12 | Li_{0.997}Mg_{0.001}Mn_{0.68}Fe_{0.3}V_{0.02}P_{0.999}N_{0.001}O_{3.999}F_{0.001} | 2.13 | 997 |
| Example 13 | Li_{0.997}Mg_{0.001}Mn_{0.58}Fe_{0.4}V_{0.02}P_{0.999}N_{0.001}O_{3.999}F_{0.001} | 1.38 | 997 |
| Example 14 | Li_{0.997}Mg_{0.001}Mn_{0.65}Fe_{0.3}V_{0.05}P_{0.999}N_{0.001}O_{3.999}F_{0.001} | 1.86 | 997 |
| Example 15 | Li_{0.988}Mg_{0.005}Mn_{0.6}Fe_{0.35}V_{0.05}P_{0.999}S_{0.001}O_{3.999}F_{0.001} | 1.50 | 197.6 |
| Example 16 | Li_{0.984}Mg_{0.005}Mn_{0.6}Fe_{0.35}V_{0.05}P_{0.995}S_{0.005}O_{3.999}F_{0.001} | 1.50 | 196.8 |
| Example 17 | Li_{0.984}Mg_{0.005}Mn_{0.6}Fe_{0.35}V_{0.05}P_{0.999}S_{0.001}O_{3.995}F_{0.005} | 1.50 | 196.8 |
| Example 18 | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 |
| Example 19 | Li_{0.984}Mg_{0.005}Mn_{0.65}Fe_{0.20}V_{0.05}Co_{0.10}P_{0.999}S_{0.001}O_{3.995}F_{0.005} | 1.86 | 196.8 |
| Example 20 | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 |
| Example 23 | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 |
| Example 24 | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 |
| Example 27 | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 |

**Table 3**

| No. | Organopolysiloxane compound | | | |
|---|---|---|---|---|
| | Types | Content *α* of polar functional group | Number average molecular weight | Content in positive electrode material composition |
| Comparative Examples 1 to 9 | / | / | / | / |
| Examples 1 to 27 | Aminoethyl aminopropyl polydimethylsiloxane | 12.0% | 3700 | 0.6 wt% |
| Example 28 | Aminoethyl aminopropyl polydimethylsiloxane | 12.0% | 3700 | 0.01 wt% |
| Example 29 | Aminoethyl aminopropyl polydimethylsiloxane | 12.0% | 3700 | 0.1 wt% |
| Example 30 | Aminoethyl aminopropyl polydimethylsiloxane | 12.0% | 3700 | 1 wt% |
| Example 31 | Aminoethyl aminopropyl polydimethylsiloxane | 12.0% | 3700 | 2 wt% |
| Example 32 | Aminoethyl aminopropyl polydimethylsiloxane | 12.0% | 3700 | 4 wt% |
| Example 33 | Polydimethylsiloxane | 0% | 1200 | 0.6 wt% |
| Example 34 | Polymethyl chloropropyl siloxane | 30.2% | 2500 | 0.6 wt% |
| Example 35 | Polymethyl trifluoropropyl siloxane | 44.0% | 1400 | 0.6 wt% |
| Example 36 | Mercaptopropyl polysiloxane | 15.0% | 2000 | 0.6 wt% |
| Example 37 | Terminal hydroxyl polydimethylsiloxane | 3.4% | 1000 | 0.6 wt% |
| Example 38 | Methoxy terminated polydimethylsiloxane | 3.1% | 2800 | 0.6 wt% |
| Example 39 | Terminal polyether polydimethylsiloxane | 10.0% | 2110 | 0.6 wt% |
| Example 40 | Pendant phosphate-grafted polydimethylsiloxane | 1.4% | 15600 | 0.6 wt% |
| Example 41 | 1,3,5,7-octamethyl cyclotetrasiloxane | 0% | 280 | 0.6 wt% |
| Example 42 | Decamethylcyclopentasiloxane | 0% | 370 | 0.6 wt% |
| Example 43 | Terminal polyether polydimethylsiloxane | 55.0% | 25312 | 0.6 wt% |
| Example 44 | Polydimethylsiloxane | 0% | 400 | 0.6 wt% |
| Example 45 | Polydimethylsiloxane | 0% | 10000 | 0.6 wt% |
| Example 46 | Polydimethylsiloxane | 0% | 50000 | 0.6 wt% |
| Example 47 | Polydimethylsiloxane | 0% | 80000 | 0.6 wt% |
| Example 48 | Polydimethylsiloxane | 0% | 100000 | 0.6 wt% |
| Example 49 | Polydimethylsiloxane | 0% | 300000 | 0.6 wt% |
| Example 50 | Polydimethylsiloxane | 0% | 400000 | 0.6 wt% |

**Table 4**

| No. | Positive electrode active material | | | | Positive electrode material composition | | Positive electrode plate | Button battery or full battery | | | | |
|---|---|---|---|---|---|---|---|---|---|---|---|---|
| | Latt ice cha nge rate (%) | Li/Mn anti-site defect concentr ation (%) | Surf ace oxy gen vale nce | Compa ction density (g/cm³) | Powder resistivity (Ω/cm) | Specific surface area (m²/g) | Contact Angle (°) | Initia l speci fic capa city of butto n batte ry mAh /g | 3C charg ing const ant curre nt ratio (%) | Expan sion rate of batter y at 60°C storag e (%) | Num ber of cycle s at capa city reten tion of 80% @45 °C | Leac hing out of Mn and Fe after cycli ng (ppm ) |
| Compar ative Exampl e 1 | 11.4 | 5.2 | -1.55 | 1.7 | 21.792 | 17.7 | 0.8 | 125. 6 | 50.1 | 48.6 | 121 | 2060 |
| Compar ative Exampl e 2 | 10.6 | 4.3 | -1.51 | 1.87 | 21.662 | 18.4 | 0.6 | 126. 4 | 50.4 | 37.3 | 129 | 1510 |
| Compar ative Exampl e 3 | 10.8 | 3.6 | -1.64 | 1.88 | 21.601 | 17.8 | 1.4 | 134.7 | 51.7 | 31.9 | 134 | 1028 |
| Compar ative Exampl e 4 | 9.7 | 2.4 | -1.71 | 1.93 | 21.801 | 18.3 | 2 | 141. 3 | 62.3 | 30.8 | 148 | 980 |
| Compar ative Exampl e 5 | 5.6 | 1.8 | -1.81 | 1.98 | 21.945 | 18 | 1.6 | 110.8 | 50.2 | 21.4 | 387 | 873 |
| Compar ative Exampl e 6 | 3.7 | 1.5 | -1.8 | 2.01 | 21.701 | 17.8 | 0.3 | 74.3 | 65.8 | 15.8 | 469 | 574 |
| Compar ative Exampl e 7 | 7.8 | 1.5 | -1.75 | 2.05 | 21.835 | 17.9 | 1.3 | 139. 4 | 64.3 | 18.3 | 396 | 447 |
| Compar ative Exampl e 8 | 8.4 | 1.4 | -1.79 | 2.16 | 21.786 | 18.2 | 2.2 | 141.7 ' | 63.9 | 22.7 | 407 | 263 |
| Compar ative Exampl e 9 | 6.3 | 1.2 | -1.82 | 2.21 | 21.978 | 18.1 | 2.7 | 156. 2 | 68.1 | 8.4 | 552 | 192 |
| Exampl e 1 | 6.3 | 1.2 | -1.82 | 2.21 | 16.512 | 13.5 | 16.5 | 156.7 | 68.9 | 8.4 | 682 | 101 |
| Exampl e 2 | 6.8 | 1.1 | -1.85 | 2.25 | 15.967 | 13.9 | 16.1 | 153. 4 | 75.1 | 7.5 | 683 | 71 |
| Exampl e 3 | 6.4 | 0.9 | -1.86 | 2.31 | 15.883 | 14.7 | 16.8 | 154. 6 | 76.7 | 8.6 | 746 | 54 |
| Exampl e 4 | 5.5 | 0.9 | -1.89 | 2.38 | 15.698 | 13.6 | 17.1 | 153. 6 | 78.4 | 8.3 | 738 | 35 |
| Exampl e 5 | 5.3 | 0.7 | -1.98 | 2.45 | 16.554 | 14.1 | 16.3 | 153. 8 | 84.5 | 7.8 | 859 | 19 |
| Exampl e 6 | 2.4 | 0.7 | -1.95 | 2.47 | 15.040 | 14.4 | 15.9 | 157. 5 | 92.5 | 6.4 | 847 | 16 |
| Exampl e 7 | 2.2 | 0.6 | -1.96 | 2.49 | 15.887 | 13.8 | 16.3 | 158. 5 | 94.8 | 6.3 | 958 | 15 |
| Exampl e 8 | 3.4 | 0.5 | -1.98 | 2.51 | 15.623 | 13.9 | 16.4 | 157. 6 | 93.8 | 6.2 | 826 | 13 |
| Exampl e 9 | 3.8 | 0.5 | -1.96 | 2.45 | 16.070 | 14.4 | 17.2 | 146. 8 | 90.3 | 6.8 | 786 | 21 |
| Exampl e 10 | 4.0 | 0.6 | -1.97 | 2.46 | 16.120 | 13.6 | 15.8 | 155. 7 | 91.2 | 6.5 | 738 | 45 |
| Exampl e 11 | 3.6 | 0.7 | -1.95 | 2.46 | 16.889 | 14.6 | 16.9 | 155. 8 | 92.6 | 6.4 | 687 | 56 |

**Table 5**

| No. | Positive electrode active material | | | | Positive electrode material composition | | Positive electrode plate | Button battery or full battery | | | | |
|---|---|---|---|---|---|---|---|---|---|---|---|---|
| | Latti ce chan ge rate (%) | Li/Mn anti-site defect concentra tion (%) | Surfa ce oxyg en valen ce | Compact ion density (g/cm³) | Powder resistivity (Ω/cm) | Specific surface area (m²/g) | Contact Angle (°) | Initial specif ic capac ity of butto n batter y mAh/ g | 3C chargi ng consta nt curren t ratio (%) | Expans ion rate of battery at 60°C storage (%) | Numb er of cycles at capaci ty retenti on of 80% @45 °C | Leachi ng out of Mn and Fe after cyclin g (ppm) |
| Exam ple 12 | 7.4 | 0.5 | -1.96 | 2.45 | 16.003 | 14.1 | 16.3 | 153.3 | 97.2 | 6.7 | 998 | 62 |
| Exam ple 13 | 7.6 | 0.4 | -1.98 | 2.48 | 16.356 | 13.2 | 17.2 | 157.1 | 85.1 | 7.8 | 1003 | 53 |
| Exam ple 14 | 7.8 | 0.6 | -1.95 | 2.47 | 15.967 | 14.3 | 16.3 | 155.4 | 85.2 | 6.9 | 1117 | 57 |
| Exam ple 15 | 6.4 | 0.5 | -1.97 | 2.49 | 16.597 | 13.1 | 15.9 | 156.4 | 82.1 | 7.5 | 988 | 56 |
| Exam ple 16 | 5.4 | 0.7 | -1.94 | 2.44 | 15.831 | 13.6 | 16.3 | 156.1 | 87.3 | 8.4 | 977 | 56 |
| Exam ple 17 | 4.2 | 0.6 | -1.98 | 2.42 | 16.001 | 13,9 | 16.3 | 156.5 | 92.1 | 7.5 | 969 | 58 |
| Exam ple 18 | 2.5 | 0.4 | -1.96 | 2.46 | 16.821 | 13.6 | 15.8 | 157.4 | 94.0 | 6.4 | 1107 | 54 |
| Exam ple 19 | 2.4 | 0.4 | -1.97 | 2.47 | 15.932 | 14.1 | 17.1 | 156.8 | 94.4 | 6.7 | 1114 | 54 |
| Exam ple 20 | 2.6 | 0.4 | -1.95 | 2.45 | 16.899 | 13.2 | 16.3 | 154.8 | 93.7 | 7.3 | 1025 | 56 |
| Exam ple 21 | 3.3 | 0.5 | -1.93 | 2.46 | 16.153 | 13.8 | 16.7 | 155.7 | 91.5 | 6.3 | 1039 | 52 |
| Exam ple 22 | 3.1 | 0.5 | -1.95 | 2.46 | 15.651 | 14.4 | 16.5 | 157.3 | 91.6 | 6.3 | 1014 | 45 |
| Exam ple 23 | 2.8 | 0.6 | -1.96 | 2.44 | 16.999 | 13.6 | 16.1 | 151.8 | 84.4 | 5.9 | 954 | 37 |
| Exam ple 24 | 2.5 | 0.5 | -1.97 | 2.45 | 16.150 | 14.1 | 16.8 | 152.3 | 90.2 | 5.6 | 1006 | 35 |
| Exam ple 25 | 2.2 | 0.4 | -1.98 | 2.46 | 16.886 | 13.1 | 16.3 | 153.3 | 92.2 | 5.2 | 1036 | 28 |
| Exam ple 26 | 3.4 | 0.6 | -1.95 | 2.25 | 15.359 | 13.6 | 16.3 | 147.3 | 92.5 | 9.3 | 1028 | 15 |
| Exam | 2.7 | 0.5 | -1.98 | 2.28 | 15.398 | 13.9 | 16 | 145.8 | 91.8 | 10.5 | 987 | 12 |
| ple 27 | | | | | | | | | | | | |

**Table 6**

| No. | Positive electrode material composition | | Positive electrode plate | Button battery or full battery | | | | |
|---|---|---|---|---|---|---|---|---|
| | Powder resistivity (Ω/cm) | Specific surface area (m²/g) | Contact Angle (°) | Initial specific capacity of button battery mAh/g | 3C charging constant current ratio (%) | Expansion rate of battery at 60°C storage (%) | Number of cycles at capacity retention of 80% @45°C | Leaching out of Mn and Fe after cycling (ppm) |
| Example 28 | 20.699 | 17.2 | 7.3 | 156.3 | 68.2 | 8.4 | 583 | 161 |
| Example 29 | 17.835 | 16.3 | 13.1 | 156.5 | 68.5 | 8.3 | 639 | 129 |
| Example 30 | 19.332 | 12.2 | 20.4 | 156.2 | 68.4 | 8.2 | 672 | 99 |
| Example 31 | 21.89 | 10.9 | 25.6 | 156.2 | 68 | 8.1 | 660 | 95 |
| Example 32 | 48.589 | 9.6 | 36.2 | 154.1 | 66.2 | 8.2 | 601 | 90 |
| Example 33 | 16.968 | 14.2 | 19.9 | 156.4 | 68.4 | 8.2 | 680 | 106 |
| Example 34 | 17.015 | 13.8 | 18.1 | 156.4 | 68.3 | 8.3 | 678 | 117 |
| Example 35 | 16.882 | 14 | 20.8 | 156.2 | 68.2 | 8.2 | 686 | 102 |
| Example 36 | 16.821 | 13.9 | 17.5 | 156.3 | 68.3 | 8.1 | 689 | 100 |
| Example 37 | 17.156 | 13.4 | 17.1 | 156.5 | 68.2 | 8.3 | 691 | 96 |
| Example 38 | 16.901 | 13.6 | 18.1 | 156 | 68.3 | 8.2 | 682 | 103 |
| Example 39 | 16.369 | 13.9 | 16.8 | 156.2 | 68.2 | 8.1 | 685 | 107 |
| Example 40 | 17.269 | 14.2 | 17.6 | 156.3 | 68.4 | 8.2 | 688 | 100 |
| Example 41 | 17.452 | 13.2 | 15.9 | 156.4 | 68.3 | 8.2 | 669 | 121 |
| Example 42 | 17.538 | 13.7 | 16.2 | 156.3 | 68.2 | 8.2 | 662 | 119 |
| Example 43 | 46.997 | 14.3 | 4.3 | 155.8 | 67.2 | 8.3 | 599 | 148 |
| Example 44 | 16.002 | 14.4 | 17.2 | 156.5 | 68.4 | 8.2 | 673 | 109 |
| Example 45 | 17.358 | 14.1 | 20.8 | 156.3 | 68.3 | 8.1 | 675 | 100 |
| Example 46 | 18.897 | 13.5 | 21.3 | 156.2 | 68.3 | 8.2 | 670 | 99 |
| Example 47 | 19.229 | 13 | 21.9 | 156.2 | 68.2 | 8.2 | 669 | 101 |
| Example 48 | 21.553 | 12.6 | 23.6 | 156 | 68.1 | 8.2 | 663 | 102 |
| Example 49 | 22.280 | 12 | 26.8 | 155.9 | 68 | 8.1 | 658 | 104 |
| Example 50 | 36.851 | 10.7 | 34.9 | 155.5 | 67.5 | 8.2 | 632 | 121 |

From Tables 4 and 5 above, it can be seen that better performance have been achieved by using the positive electrode material compositions of Examples of this application than Comparative Example, in one or all aspects of cycling performance, high-temperature stability, specific capacity, and compaction density. By simultaneously doping specific elements at the Li, Mn, P, and O sites of LiMnPO₄ with specific amounts, improved rate performance can be achieved while reducing the leaching out of Mn and Fe, resulting in improved cycling performance and/or high-temperature stability. Additionally, the specific capacity and compaction density of the positive electrode active material can also be increased. The combination of the positive electrode active material with the organopolysiloxane compound of the examples of the present application can further alleviate the corrosion of the surface of the positive electrode active material caused by the electrolytic solution, and reduce the leaching out of Mn and Fe, thereby significantly improving the cycling performance of the battery.

From the comparison between Examples 18-20 and 23-25, it can be seen that with the same other elements, (1-*y*):*y* in the range of 1 to 4 can further improve the energy density and cycling performance of the battery.

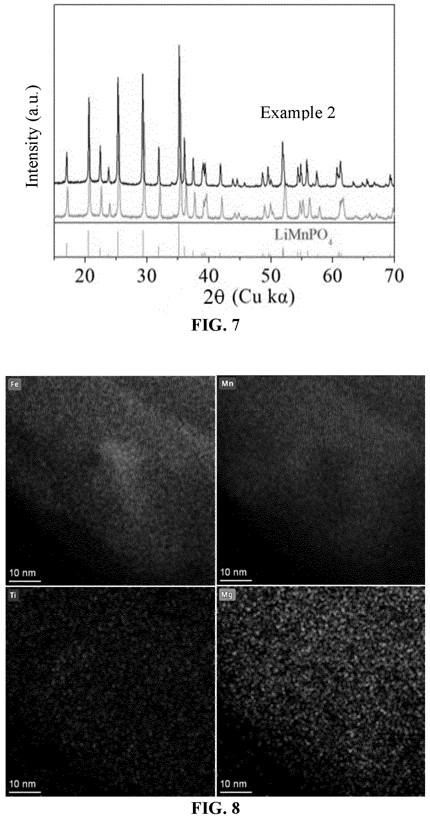

FIG. 7 shows the X-ray diffraction pattern (XRD) of the undoped LiMnPO₄ and the positive electrode active material prepared in Example 2. It can be seen from FIG. 7 that the main characteristic peak positions in the XRD spectrum of the positive electrode active material in Example 2 are consistent with those of the undoped LiMnPO₄, indicating that no impurity phase is introduced during the doping process, and the improvement in performance is mainly caused by doping of elements rather than by impurity phase. FIG. 8 shows the X-ray energy dispersive spectrum (EDS) of the positive electrode active material prepared in Example 2. The dotted distribution in FIG. 8 represents individual doped elements. It can be seen from FIG. 8 that the element doping in the positive electrode active material in Example 2 is uniform.

From Table 6 above, it can be seen that with the same other positive electrode active materials, the cycling performance of the battery can further be improved by using combination of the organopolysiloxane compound that has one or more of the appropriate content of polar functional group, average molecular weight and the addition amount with the positive electrode active material, without affecting energy density and dynamic performance.

From Examples 1, and 28-32, it can also be seen that with the increase of the amount of organopolysiloxane compound, the powder resistance of the positive electrode material composition decreases first and then increases. The possible reason is that when the amount of organopolysiloxane compound is within a certain range, the interaction between conductive agents can be reduced, and the agglomeration of conductive agents can be alleviated due to its hydrophobicity, so that a better conductive network can be formed.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A positive electrode material composition comprising a positive electrode active material and an organopolysiloxane compound,
wherein said positive electrode active materialand has a chemical formula of LiₐAₓMn_{1-y}B_{y}P_{1-z}C_{z}C₄₋ₙDₙ, said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said *a* is in the range of 0.9 to 1.1, optionally in the range of 0.97 to 1.01, said *x* is in the range of 0.001 to 0.1, optionally in the range of 0.001 to 0.005, said *y* is in the range of 0.001 to 0.5, optionally in the range of 0.25 to 0.5, said z is in the range of 0.001 to 0.1, said *n* is in the range of 0.001 to 0.1, and said positive electrode active material is electrically neutral.

2. The positive electrode material composition according to claim 1, wherein the organopolysiloxane compound comprises at least one structural unit shown in Formula 1, 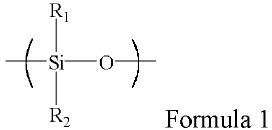
R₁ and R₂ each independently represent H or at least one of the group consisting of the following functional groups: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbon groups, C₁-C₂₀ halogenated aliphatic hydrocarbon group, C₁-C₂₀ heteroaliphatic hydrocarbon groups, C₁-C₂₀ halogenated heteroaliphatic hydrocarbon groups, C₆-C₂₀ aromatic hydrocarbon groups, C₆-C₂₀ halogenated aromatic hydrocarbon groups, C₂-C₂₀ heteroaromatic hydrocarbon groups, and C₂-C₂₀ halogenated heteroaromatic hydrocarbon groups;
optionally, R₁ and R₂ each independently represent H or at least one of the group consisting of the following functional groups: -COOH, -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, and phenyl;
more optionally, R₁ and R₂ each independently represent H or at least one of the group consisting of the following functional groups: -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, and C₂-C₈ haloalkenyl groups.

3. The positive electrode material composition according to any one of claims 1 to 2, wherein the organopolysiloxane compound comprises one or more selected from of a linear polysiloxane, and a cyclic polysiloxane, optionally, the organopolysiloxane compound is selected from a linear polysiloxane.

4. The positive electrode material composition according to claim 3, wherein the linear polysiloxane further comprises a capping group,
optionally, the capping group comprises at least one of the group consisting of the following functional groups: polyethers, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, C₆-C₂₀ aromatic hydrocarbon groups, C₁-C₈ alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

5. The positive electrode material composition according to any one of claims 3 to 4, wherein the linear polysiloxane comprises one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, terminal epoxy polysiloxane, terminal hydroxyl polydimethylsiloxane, terminal polyether polydimethylsiloxane, side chain aminopropyl polysiloxane, pendant hydroxymethyl polysiloxane, pendant hydroxypropyl polysiloxane, pendant polyether-grafted polydimethylsiloxane, and pendant phosphate-grafted polydimethylsiloxane; optionally, one or more of polydimethyl siloxane, polymethyl chloropropyl siloxane, polymethyl trifluoropropyl siloxane, mercaptopropyl polysiloxane, aminoethyl aminopropyl polydimethylsiloxane, terminal hydroxyl polydimethylsiloxane, terminal polyether polydimethylsiloxane, pendant phosphate-grafted polydimethylsiloxane; and/or,
the cyclic polysiloxane comprises one or more of cyclic polydimethylsiloxane, cyclic polymethyl vinyl siloxane, cyclic polymethyl hydrosiloxane, and cyclic polymethyl trifluoropropyl siloxane; optionally, one or more of 1,3,5,7-octamethyl cyclotetrasiloxane, 1,3,5,7-tetrahydro-1,3,5,7-tetramethyl cyclotetrasiloxane, decamethylcyclopentasiloxane, 2,4,6,8-tetramethyl cyclotetrasiloxane, 2,4,6,8-tetramethyl-2,4,6,8-tetravinyl cyclotetrasiloxane, hexadecamethylcyclooctasiloxane, and tetradecamethylcycloheptasiloxane.

6. The positive electrode material composition according to any one of claims 1 to 5, wherein the organopolysiloxane compound has a number average molecular weight of 300,000 or less, optionally of 400 to 80,000.

7. The positive electrode material composition according to any one of claims 1 to 6, wherein a polar functional group is present in a mass percentage *α* in the organopolysiloxane compound, 0≤*α* < 50%, optionally, 5%≤*α*≤30%.

8. The positive electrode material composition according to any one of claims 1 to 7, wherein the organopolysiloxane compound is present in an amount of 0.01 wt% to 2 wt%, optionally 0.1 wt% to 2 wt%, based on the total weight of the positive electrode material composition.

9. The positive electrode material composition according to any one of claims 1 to 8, wherein the positive electrode active material is cladded with carbon on the surface.

10. The positive electrode material composition according to any one of claims 1 to 9, wherein each of said A, C and D is independently any one element in the above-mentioned respective range, and said B is at least two elements in its range;
optionally, said A is any one element selected from Mg and Nb, and/or
said B is at least two elements selected from Fe, Ti, V, Co and Mg, further optionally being a combination of Fe with one or more element selected from Ti, V, Co and Mg, and/or
said C is S, and/or
said D is F.

11. The positive electrode material composition according to any one of claims 1 to 10, wherein the z is selected from a range of 0.001 to 0.005; and/or the n is selected from a range of 0.001 to 0.005.

12. The positive electrode material composition according to any one of claims 1 to 11, wherein a ratio of (*1-y*):*y* is in a range of 1 to 4, optionally in a range of 1.5 to 3, and a ratio of *a*:*x* is in a range of 9 to 1100, optionally in a range of 190 to 998.

13. The positive electrode material composition according to any one of claims 1 to 12, wherein the positive electrode active material satisfies at least one of the following (1) to (4):
(1) the positive electrode active material has a lattice change rate of 8% or less, optionally 4% or less;
(2) the positive electrode active material has a Li/Mn anti-site defect concentration of 2% or less, optionally 0.5% or less;
(3) the positive electrode active material has a surface oxygen valence of -1.82 or less, optionally -1.89 to -1.98; and
(4) the positive electrode active material has a compaction density of 2.0 g/cm³ or more, optionally 2.2 g/cm³ or more, at 3T.

14. The positive electrode material composition according to any one of claims 1 to 13, further comprising a conductive agent and a binder,
optionally, the binder is present in a content of 1.79 wt% to 10 wt%, based on the total weight of the positive electrode material composition; and
optionally, the conductive agent is present in a content of 0.2 wt% to 10 wt%, based on the total weight of the positive electrode material composition.

15. The positive electrode material composition according to any one of claims 1 to 14, wherein the positive electrode material composition has a powder resistivity of 4 Ω/cm to 50 Ω/cm, optionally from 4 Ω/cm to 40 Ω/cm at 12MPa; and/or,
the positive electrode material composition has a specific surface area of 8 m²/g to 20 m²/g, optionally 8 m²/g to 15 m²/g.

16. A method for preparing a positive electrode material composition, comprising
Step (1), dissolving a manganese source, a source of element B and an acid in a solvent and stirring to produce a suspension of a manganese salt doped with element B, filtering the suspension and drying the resulting filter cake to obtain the manganese salt doped with element B;
Step (2), adding a lithium source, a phosphorus source, a source of element A, a source of element C and a source of element D, a solvent and the manganese salt doped with element B obtained from step (1) to a reaction vessel for grinding and mixing to obtain a slurry;
Step (3), transferring the slurry obtained from step (2) to a spray drying equipment for spray drying and granulating to obtain granules;
Step (4), sintering the granules obtained from step (3) to obtain a positive electrode active material;
Step (5), mixing the positive electrode active material obtained from step (4) with an organopolysiloxane compound, and optionally a conductive agent and a binder, to obtain the positive electrode material composition,
wherein said positive electrode active material has a chemical formula of LiₐAₓMn_{1-y}B_{y}P_{1-z}C_{z}C₄₋ₙDₙ, said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said *a* is in a range of 0.9 to 1.1, said *x* is in a range of 0.001 to 0.1, said *y* is in a range of 0.001 to 0.5, said z is in a range of 0.001 to 0.1, said n is in a range of 0.001 to 0.1, and said positive electrode active material is electrically neutral.

17. The method according to claim 16, wherein the stirring in said step (1) is carried out at a temperature in a range of 60-120°C, and/or
the stirring in said step (1) is carried out by stirring at a rate of 200-800 rpm, and/or
the grinding and mixing in said step (2) are carried out for 8-15 hours, and/or
the sintering in said step (4) is carried out at a temperature in a range of 600-900°C for 6-14 hours.

18. The method according to claim 16 or 17, wherein said step (2) further comprises adding a carbon source to a reaction vessel for grinding and mixing.

19. A positive electrode plate comprising a positive electrode current collector and a positive electrode film layer provided on at least one surface of the positive electrode current collector, wherein said positive electrode film layer comprises the positive electrode material composition according to any one of claims 1 to 15 or the positive electrode material composition prepared by the process according to any one of claims 16 to 18, and said positive electrode material composition is present in said positive electrode film layer in a content of 50 wt% or more, optionally in a content of 90-100 wt%, based on total weight of said positive electrode film layer.

20. The positive electrode plate according to claim 19, wherein a solid-liquid contact angle between the positive electrode film layer and a non-aqueous organic solvent is between 3° and 90°, optionally between 3° and 60°, and more optionally between 10° and 30°; and/or,
the positive electrode film layer has a porosity of 15% to 50%, and optionally 20% to 40%.

21. A secondary battery comprising the positive electrode material composition according to any one of claims 1 to 15, or the positive electrode material composition prepared by the method according to any one of claims 16 to 18, or the positive electrode plate according to any one of claims 19 to 20.

22. An electrical device comprising the secondary battery according to claim 21.
